# EUROPEAN PATENT APPLICATION

(11) **EP 2 660 361 A1**
(43) Date of publication of application: **06.11.2013**
(21) Application number: 11852322.4
(22) Date of filing: 28.12.2011
(51) Int. Cl.: C25D 7/00, B82Y 30/00, C01B 31/02, C25D 5/50, C25D 5/54, C25D 15/02, H01B 5/02, H01B 5/14, H01B 13/00

(54) **CARBON NANOTUBE METAL COMPOSITE MATERIAL AND PRODUCTION METHOD FOR SAME**

(30) Priority: 28.12.2010 JP 2010293099
(71) Applicant: National Institute of Advanced Industrial Science and Technology, Tokyo 100-8921 (JP)
(72) Inventor: HATA Kenji, Tsukuba-shi Ibaraki 305-8565 (JP); YAMADA Takeo, Tsukuba-shi Ibaraki 305-8565 (JP); SUBRAMANIAM Chandramouli, Tsukuba-shi Ibaraki 305-8565 (JP)
(74) Representative: Ahner, Philippe
(86) International application number: PCT/JP2011/080522
(87) International publication number: WO 2012/091139

(57) **Abstract**

Provided are a CNT plating metal composite with high conductivity and wherein metal plating is plated onto the inside of a high-density CNT aggregate, and a production method for same. Also provided is a method for patterning the CNT plating metal composite. A CNT metal composite is provided including a CNT aggregate formed by adhering a metal onto a plurality of CNTs, wherein when an X-ray diffraction analysis is performed using a Cu-Kα ray as a radiation source, an intensity ratio between a peak having the greatest intensity belonging to the metal and a peak having the greatest intensity belonging to an oxide of the metal is 10 or more and the volume resistance is 2x10⁻⁶ Ωcm or more and 5x10⁻³ Ωcm or less.

## Description

### FIELD OF THE INVENTION

The present invention is related to a metal composite containing carbon nanotubes (referred to as CNT herein) and a method of manufacturing the same.

### BACKGROUND OF THE INVENTION

An electrolytic plating method is a technique used in various applications and other than a conventional techniques for using metal ions in a material a technique for dispersing fibers or particles with the purpose of providing various functions to a plating film have been reported. Among this type of fibers or particles, carbon fibers, in particular a light weight and high strength CNT with excellent conductivity and thermal conductivity is attracting attention.

For example, a method of forming a plating film in which CNTs are mixed in a metal by adding a dispersant and CNT to a plating solution and dispersing a CNT within the plating solution is described in patent document 1.

In addition, 1, 3-dialkylimidazolium halogen compound and/or monoalkylimidazolium halogen compound including an aluminum halogen compound, CNT and an alkyl group with a carbon number of 1∼12 as a nano-carbon/aluminum composite having high strength and electrical conductivity at once is described in patent document 2.

### PRIOR ART DOCUMENTS

### PATENT DOCUMENTS

Patent Document 1: Japanese Laid Open Patent 2007-9333
Patent Document 1: Japanese Laid Open Patent 2007-70689

### SUMMARY OF THE INVENTION

### PROBLEMS TO BE SOLVED BY THE INVENTION

However, a conventional composite of CNT and metal ions described above is a method of plating by dispersing the CNT in a plating electrolyte solution, dispersibility of the CNT within the plating electrolyte solution is low. In addition, because the CNT is dispersed in the plating electrolyte solution using ultrasonic irradiation or stirring, the CNT is damaged when dispersed which reduces the excellent properties of the CNT. Furthermore, in this type of dispersion method, because it is difficult to disperse a CNT in the plating electrolyte solution at a high concentration, it is difficult to obtain a metal composite containing a large amount of CNTs.

On the other hand, in the case were a CNT is not dispersed in a plating electrolyte solution as described above but plating on a high density CNT aggregate is performed, it is difficult to plate a metal uniformly to the interior of the CNT aggregate. Furthermore, when scale is increased, the difficulty of plating metal to the interior of the high density CNT aggregate itself increases.

The present invention attempts to solve the conventional technical problems described above and by providing a CNT metal composite with high conductivity arranged with a high density CNT aggregate adhered with a metal and a method of manufacturing the same. In addition, a method of patterning a CNT metal composite is also provided.

### MEANS FOR SOLVING THE PROBLEMS

According to one embodiment of the present invention, a CNT metal composite is provided including a CNT aggregate formed by adhering a metal onto a plurality of CNTs, wherein when an X-ray diffraction analysis is performed using a Cu-Kα ray as a radiation source, an intensity ratio between a peak having the greatest intensity belonging to the metal and a peak having the greatest intensity belonging to an oxide of the metal is 10 or more and the volume resistance is 2x10⁻⁶ Ωcm or more and 5x10⁻³ Ωcm or less.

In addition, according to one embodiment of the present invention, a CNT metal composite is provided including a CNT aggregate arranged with a CNT having a metal adhered to a surface thereupon, the CNT forming a CNT matrix structure, wherein at least one part of the CNT contacts the metal, and at least one part of the CNT covers the metal, at least one part of the CNT is attached to cover and wrap the metal, at least one part of the CNT is attached to cover a film on a surface of the metal, and at least one part of the CNT contacts and inter-posit the surface of the metal.

The CNT metal composite includes 3% by weight or more and 70% by weight or less of the CNTs.

A BET specific surface area of the CNT metal composite is 0.1m²/g or more and 100m²/g or less.

In the CNT metal composite, at least one part of the plurality of CNTs is orientated.

The CNT metal composite is pattered.

The CNT metal composite is placed on a substrate.

A surface of the substrate on which the CNT metal composite is placed includes insulation properties.

At least one part of the CNT metal composite is covered by a film to prevent oxidation.

The metal is a plating metal.

The metal is selected from gold, copper, silver, nickel, zinc, chrome, platinum, tin or an alloy of these or a solder.

The metal is copper.

The metal is copper and the size of the strength of (111), (200), (220) measured by an X-ray diffraction analysis using a Cu-Kα ray as a radiation source is (111) > (200) > (220) where a 2θ diffraction angle is in a range of 40° or more or 80° or less.

The CNT is a single-walled CNT.

The CNT metal composite is plate shaped.

Any of the depth, breadth and thickness exterior dimensions of the plate shaped CNT metal composite is 1 µm or more.

Two or more of the depth, breadth and thickness exterior dimensions of the plate shaped CNT metal composite is 1 µm or more.

The CNT metal composite is line shaped.

Any of the depth, breadth and thickness exterior dimensions of the line shaped CNT metal composite is 1 µm or more

Two or more of the depth, breadth and thickness exterior dimensions of the line shaped CNT metal composite is 1 µm or more.

In addition, according to one embodiment of the present invention, a conductive material is provided including any one of the CNT metal composites.

In addition, according to one embodiment of the present invention, wiring is provided including any one of the CNT metal composites.

The wiring is arranged at certain intervals.

In addition, according to one embodiment of the present invention, a circuit is provided including any one of the CNT metal composites.

In addition, according to the present invention, a method of manufacturing a CNT metal composite is provided including a step of preparing a CNT aggregate having a pore diameter distribution maximum of 50 nm or more measured using a BJH method from an adsorption curve using liquid nitrogen, a first electrolyte plating step for immersing the CNT aggregate in an electrolyte plating solution and electrolyte plating, and a step of annealing the electrolyte plated CNT aggregate.

In the method of manufacturing a CNT metal composite, the electrolyte plating solution includes a metallic salt and an organic solvent for dissolving the metallic salt.

In the method of manufacturing a CNT metal composite, the organic solvent is acetonitrile.

In the method of manufacturing a CNT metal composite, the metallic salt includes copper.

In the method of manufacturing a CNT metal composite, the CNT aggregate is electrolyte plated with an average current density of 10 mA/cm² or less.

In the method of manufacturing a CNT metal composite, the annealing step is performed in a hydrogen atmosphere.

In the method of manufacturing a CNT metal composite, the process temperature of the annealing step performed in a hydrogen atmosphere is 100°C or more and 700°C or less.

In the method of manufacturing a CNT metal composite, after the annealing step, the CNT metal composite is immerse in an electrolyte plating solution and a second electrolyte plating step is performed.

In the method of manufacturing a CNT metal composite, the electrolyte plating solution includes a metallic salt and water for dissolving the metallic salt in the second electrolyte plating step.

In the method of manufacturing a CNT metal composite, a step of preparing the CNT aggregate further includes a step of placing the CNT aggregate on a surface of a substrate having insulation properties.

In the method of manufacturing a CNT metal composite, a step of preparing the CNT aggregate further includes a step of patterning the CNT aggregate after placing the CNT aggregate on the substrate.

### EFFECTS OF THE INVENTION

According to the present invention, it is possible to obtain a CNT metal composite having high conductivity which can be used in a conductor, wiring or circuit.

### BRIEF EXPLANTION OF THE DRAWINGS

Fig. 1 is an exemplary diagram showing a CNT metal composite related to one embodiment of the present invention.
Fig. 2 is a scanning electron microscope (SEM) image of the CNT metal composite 100related to one embodiment of the present invention.
Fig. 3 is an exemplary diagram showing a matrix structure of collected CNT aggregates related to one embodiment of the present invention.
Fig. 4 is an exemplary diagram showing a fiber shaped CNT 12 related to one embodiment of the present invention.
Fig. 5 is an exemplary diagram showing a fiber shaped CNT 12 related to one embodiment of the present invention.
Fig. 6 is an exemplary diagram showing a fiber shaped CNT 12 related to one embodiment of the present invention.
Fig. 7 is an exemplary diagram showing a fiber shaped CNT 12 related to one embodiment of the present invention.
Fig. 8 is an exemplary diagram showing a fiber shaped CNT 12 related to one embodiment of the present invention.
Fig. 9 is an exemplary diagram showing a fiber shaped CNT 12 related to one embodiment of the present invention.
Fig. 10 is an exemplary diagram showing a fiber shaped CNT 12 related to one embodiment of the present invention.
Fig. 11 is an exemplary diagram showing a fiber shaped CNT 12 related to one embodiment of the present invention.
Fig. 12 is a concept diagram of a CNT metal composite 100 including a structure arranged with a first part contacting a substrate, a second part separated from the substrate and a third part connecting the first part and second part related to one embodiment of the present invention.
Fig. 13 is an exemplary diagram showing a manufacturing method of the CNT metal composite 100 related to one embodiment of the present invention.
Fig. 14 is an exemplary diagram showing an example of a synthesis device of a CNT oriented aggregate 10 related to one embodiment of the present invention.
Fig. 15 is an exemplary diagram showing an example of a synthesis device of a CNT oriented aggregate 10 related to one embodiment of the present invention.
Fig. 16 is an exemplary diagram showing a manufacturing process of a CNT oriented aggregate 213 related to one embodiment of the present invention.
Fig. 17 is an exemplary diagram showing a manufacturing method of a pattern formed CNT metal composite 300 related to one embodiment of the present invention.
Fig. 18 is an exemplary diagram showing a manufacturing method of a CNT metal composite 400 related to one embodiment of the present invention.
Fig. 19 is a SEM image of an electrolyte plated CNT metal composite related to one example of the present invention.
Fig. 20 is an exemplary diagram showing the measurement results of an X-ray diffraction analysis (XRD) of a CNT metal composite related to one example of the present invention.
Fig. 21 is a SEM image of a CNT metal composite after annealing related to one example of the present invention.
Fig. 22 is a Raman spectrum of a CNT metal composite related to one example of the present invention.
Fig. 23 shows the measurement results of an SEM-EDAX of a CNT metal composite related to one example of the present invention, (a) and (b) is expanded diagram of a low energy region.
Fig. 24 shows the measurement results of an SEM-EDAX of a CNT metal composite related to one example of the present invention, (a) is a SEM image, (b) shows Cu-Kα mapping, (c) shows C-Kα mapping respectively, (d) shows energy mapping of Cu-Kα and C-Kα, (e) is an overlapped diagram of energy mapping of Cu-Kα and C-Kα on one part of the SEM image.
Fig. 25 is a diagram showing the relationship between average current density, volume resistance ratio (Ωcm), volume ratio (Vol%) of cupper, BET specific surface area (m²/g) and thickness (µm).
Fig. 26 is a SEM image of a CNT metal composite electrolyte plated using a copper ion solution dissolved with water related to a comparative example of the present invention.
Fig. 27 is an exemplary diagram showing a manufacturing process of a CNT metal composite related to one example of the present invention.
Fig. 28 is a diagram showing a SU-8 spin coat profile related to one example of the present invention.
Fig. 29 is a diagram showing a pulse voltage profile of electrolyte plating related to one example of the present invention.
Fig. 30 is a SEM image of a pattered CNT aggregate related to one example of the present invention, (b) is an expanded view of the CNT aggregate in (a).
Fig. 31 is a diagram showing a pattern formed CNT aggregate related to one example of the present invention, (a) and (b) are SEM images, (c) and (d) are laser microscope images. In addition, (a) is an expanded view of the CNT aggregate in (b), (c) is an observation image taken from above and (d) is an observation image taken from obliquely upward.
Fig. 32 is a SEM image of a CNT metal composite electrolyte plated on a pattern formed CNT aggregate related to one example of the present invention.
Fig. 33 is an expanded view of Fig. 32, (a) is a diagram of a part where a Ti-Au wire and CNT metal composite contact observed from obliquely upward, (b) is a diagram of a CNT metal composite observed from obliquely upward, (c) is an expanded view of (d) and (d) is a diagram of the part where a Ti-Au wire and CNT metal composite contact observed from above.
Fig. 34 is a SEM image of a CNT metal composite electrolyte plated on a pattern formed CNT aggregate related to one example of the present invention.
Fig. 35 is a SEM image of a circuit using a CNT metal composite related to one example of the present invention.
Fig. 36 is a diagram showing the relationship between the thickness and volume resistance ratio of a CNT metal composite related to one example of the present invention.

### EMBODIMENTS FOR REALIZING THE INVENTION

A CNT metal composite and method of manufacturing the CNT composite related to the present invention are explained below while referring to the diagrams. The CNT metal composite and method of manufacturing the CNT composite related to the present invention should not be interpreted as being limited to the descriptions in the embodiments and examples illustrated herein. Furthermore, in the diagrams referred to in the embodiments and examples described herein, the same parts or parts having similar functions are attached with same reference symbols and repeated explanations of these parts are omitted.

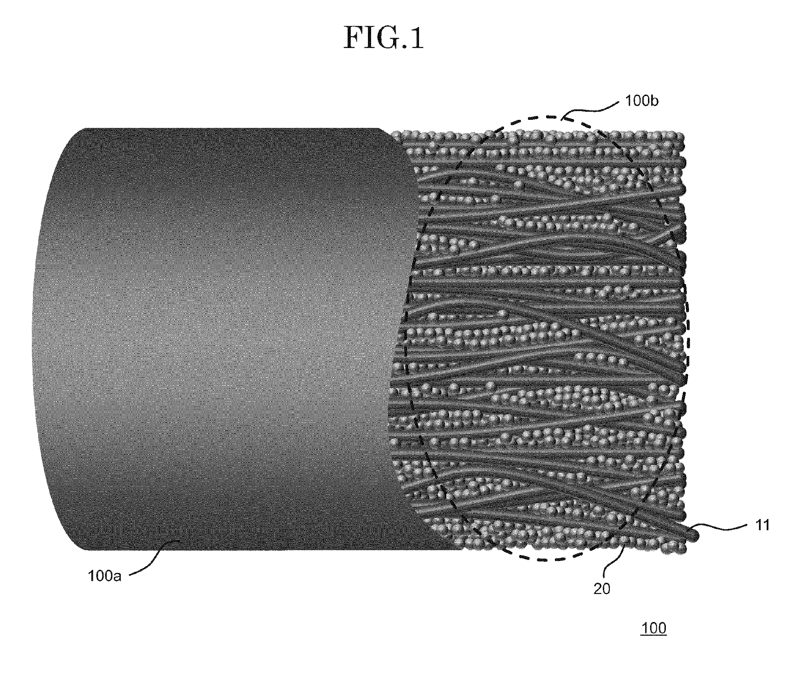

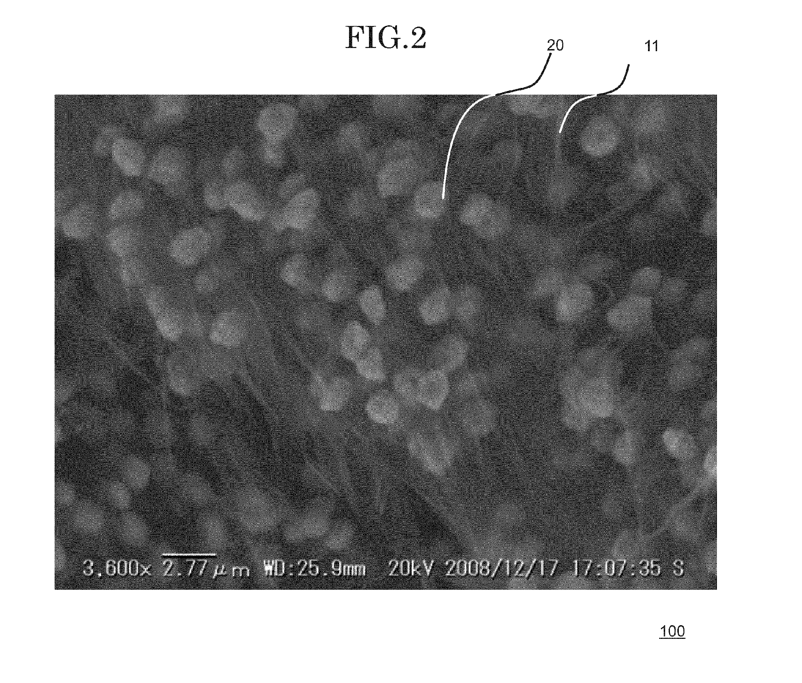

Fig. 1 is an exemplary diagram of a CNT metal composite 100 related to one embodiment of the present invention. An exterior part 100a of the CNT metal composite 100 and an internal cross section 100b formed by cleaving or severing the CNT metal composite 100 are shown in Fig. 1. In addition, Fig. 2 is a scanning electron microscope (SEM) image of the CNT metal composite 100. The CNT metal composite 100 is formed by adhering metal 20 to a CNT aggregate 10 formed by a plurality of CNTs 11. That is, the CNT metal composite 100 has a structure arranged with the CNT aggregate 10 formed by adhering metal 20 to a plurality of CNTs 11. The CNT metal composite 100 has a structure wherein the metal 20 is adhered not only to the external surface of the CNT aggregate 10 but also to the CNTs 11 within the CNT aggregate 10. By adopting this type of structure the CNT metal composite 100 has high electrical conductivity.

In addition, the CNT metal composite 100 is preferred to have an intensity ratio between the strongest peak attributable to the metal (copper) and the strongest attributable to an oxide of the metal (copper oxide (I) (Cu₂O) in the case of copper and copper oxide (CuO)) of 10 or more, more preferably 20 or more and still more preferably 50 or more in the case where copper (Cu) is adhered to the CNT aggregate 10 as the metal and when an X-ray diffraction analysis (XRD) is performed (θ-2θ method) on the internal cross section 100b using a Cu-Kα (λ=0.15418 nm) ray as a radiation source. A peak caused by an oxide of the metal may also include a state where it cannot be observed the same as the noise level and the intensity ratio is significantly large that it cannot essentially be measured. Although there is not particular upper limit, when the peak is 100,000 or more, the peak caused by the oxide of the metal is very low making it essentially difficult to evaluate. This intensity ratio shows the oxide level of the metal and if the intensity ratio is large the proportion of oxidized metal is low. Because conductivity of copper oxide is remarkably low compared to copper, it is preferred that CNT metal composite 100 have as low an amount of copper oxide as possible. The CNT metal composite 100 related to the present embodiment has an intensity ratio of 10 or more and therefore the oxide level of copper used as the metal is significantly low and shows good conductivity. The metal 20 covers the periphery surface of the CNT aggregate 10 and because a metal layer is sometimes formed as shown in Fig. 1, an X-ray diffraction analysis analyzes the interior of the CNT metal composite 100 and analyzes the interior cross section 100b when the CNT metal composite 100 is cleaved and severed. At this time, it is preferred that the CNT metal composite not be exposed to oxygen as much as possible between cleaving and severing the composite and an analysis of the CNT metal composite.

In the case where copper (Cu) is adhered to the CNT aggregate 10 as the metal in the CNT metal composite 100, the size of the intensity of (111), (200), (220) measured by XRD using Cu-Kα rays as a radiation source is preferred to be (111) > (200) > (220) where the diffraction angle 2θ is in a range of 40° or more and 80° or less. Because copper has this type of diffraction pattern, if the intensity size of (111), (200), (220) of the CNT metal composite measured by XRD, then the ratio of copper oxide included in the CNT metal composite is low. Therefore, the CNT metal composite 100 which shows this type of diffraction pattern has excellent conductivity without including hardly any copper oxide.

As a result, the CNT metal composite 100 has significantly low resistance and is preferred to have a volume resistance ratio of 5x10⁻³ Ωcm or less, more preferably 1x10⁻⁴ Ωcm and still more preferably 5x10⁻⁴ Ωcm as an upper limit. Although it is preferred that the volume resistance ratio be on the low side, the volume resistance ratio cannot be reduced to lower than 2x10⁻⁶ Ωcm as a lower limit. Therefore, the CNT metal composite 100 related to the present invention is an excellent CNT metal composite having high conductivity.

In addition, the CNT metal composite 100 related to the present embodiment includes 3% or more by weight of CNTs, preferably 5% or more by weight, more preferably 10% or more by weight and 70% or less by weight. The CNT metal composite 100 is the lighter and stronger the composite and has CNT properties with more excellent electrical conductivity and thermal conductivity the larger the contained ratio of CNTs, it is possible to manufacture a favorable CNT metal composite. When the contained ratio of CNTs is less than 3% by weight, the CNT metal composite does not shows the excellent conductivity of CNTs. In addition, when the contained ratio of CNTs exceeds 70% by weight, the amount of metal which adheres to the surface of the CNT aggregate just increases and the conductivity of the CNT metal composite does not improve.

In addition, the CNT metal composite 100 related to the present embodiment has a volume contained ratio of copper of 20% or more, more preferably a volume contained ratio of 25% or more and 70% or less. The CNT metal composite 100 is the lighter and stronger the composite and has CNT properties with more excellent electrical conductivity and thermal conductivity the larger the contained ratio of CNTs, it is possible to manufacture a favorable CNT metal composite. When the volume contained ratio of copper is less than 20%, the CNT metal composite does not show excellent copper conductivity. In addition, if the volume contained ratio of copper exceeds 70%, the amount of metal which adheres to the surface of the CNT aggregate just increases and the conductivity of the CNT metal composite does not improve.

The BET specific surface area of the CNT metal composite 100 calculated using the Brunauer, Emmett and Teller method by measuring an adsorption isotherm using 77K of liquid nitrogen is 0.1 m²/g or more and 100 m²/g, and preferably 80 m²/g or less and more preferably 50 m²/g or less/ If the BET specific surface area is low, this shows that the metal and CNT are unified as a single unit and a good interface is formed between the metal and the CNT. This type of CNT metal composite has excellent conductivity. The CNT metal composite 100 related to the present embodiment shows excellent conductivity when including a BET specific surface area within the range described above.

The CNT metal composite 100 related to the present embodiment not only includes excellent conductivity but can also be patterned. For example, it is possible to favorably pattern the CNT metal composite 100 by forming the composite into a plate shape. When the exterior dimensions of the CNT metal composite 100 are set to depth (D), width (W) and thickness (T), either is preferred to be 1 µm or more and 2 or more of these being 1 µm is more preferable. The structure of the CNT metal composite including a structure in which metal is also adhered to the interior of the CNT aggregate is difficult to achieve using the conventional technology, however, because the structure of the CNT metal composite 100 related to the present invention can be formed into this type of large sized CNT metal composite and is suitable for patterning, a large degree of freedom is provided to circuit design using the CNT metal composite.

In addition, the CNT metal composite 100 can be formed in a line shape. By forming the CNT metal composite 100 in a line shape it is possible to use the composite in wiring or circuit formation. When the exterior dimensions of the CNT metal composite 100 are set to depth (D), width (W) and thickness (T), either is preferred to be 1 µm or more and 2 or more of these being 1 µm is more preferable. The CNT metal composite 100 related to the present invention can be formed into this type of large sized CNT metal composite, wiring can be formed using the CNT metal composite and can be used in the manufacture of circuits. By patterning the CNT metal composite 100 it is possible to use the composite in the manufacture of wiring or circuits.

### (CNT Aggregate)

Here, the CNT related to the present embodiment is explained. The CNT 11 related to the present embodiment is preferred to be a single-walled CNT (SWNT). If the CNTs are mainly closed CNTs then the specific surface area of the single-walled CNT related the present embodiment is preferred to 800 m²/g or more and more preferably 1000 m²/g or more. In addition, if the CNTs are mainly opened CNTs then the specific surface area of the single-walled CNT related the present embodiment is preferred to 1300 m²/g or more and more preferably 1500 m²/g or more. Although it is preferred that the specific surface area be as large as possible, according to a theoretical calculation, closed CNTs are explained with a specific surface area of about 1300 m²/g and opened CNTs with 2600 m²/g. A CNT aggregate having single-walled CNTs including this type of high specific surface area has a high interface density between metal and the CNT in the CNT metal composite and it is possible to manufacture an excellent CNT metal composite combining both the characteristics of metal and CNTs.

In addition, the CNT 11 related to the present embodiment is preferred to have a carbon purity of 98% by mass or more and/or metal impurities of 1% by mass or less. Impurities reduce the conductivity of the CNT metal composite. A CNT having a carbon purity of 98% by mass or more and/or metal impurities of 1 % by mass or less is favorable in terms of manufacturing a CNT metal composite having high conductivity. The purity of the CNT 11 related to the present embodiment is obtained from the results of elemental analysis using fluorescence X-rays. Although there is no upper limit to the carbon purity, from the view point of manufacture it is difficult to obtain a carbon purity of 99.9999% or more. Although there is no lower limit to the metal impurities, it is difficult to reduce the metal impurities to 0.0001 % or less in terms of manufacture.

The CNT aggregate 10 related to the present invention is preferred to have a pore diameter distribution maximum of 50 nm or less, more preferably 40 nm or less and still more preferably 30 nm or less. Nano sized pore diameter between single-walled CNTs can be calculated from the adsorption isotherm using 77K of liquid nitrogen. It is preferred to use the BJH method (see J. Amer. Chem. Soc. Journal, Volume 73 (1951), page 373) which assumes that a pore has a cylinder shape as a logical equation for calculating a pore diameter distribution. Pore diameter defined in the present specification is calculated using the BJH method from the adsorption isotherm using 77K of liquid nitrogen. In the case where the pore diameter distribution maximum between CNTs is in the range described above, CNTs are present in a high density in the CNT metal composite and it is possible to manufacture a CNT metal composite filled with a large amount of CNTs. In this way, the CNT metal composite 100 filled with a large amount of CNTs is an excellent composite having high conductivity.

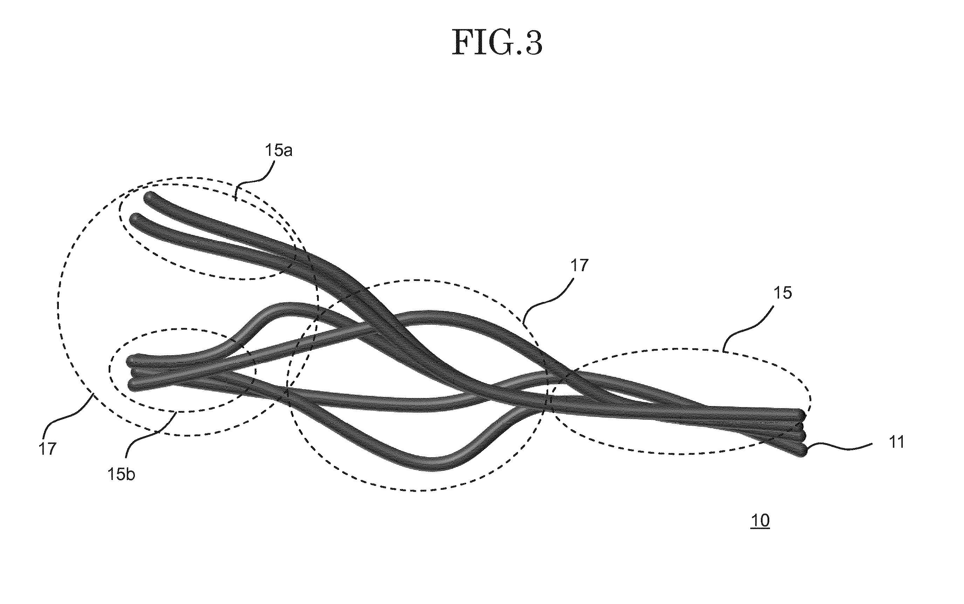

In addition, the CNT aggregate 10 related to the present embodiment is arranged with a matrix structure in which CNTs 11 assemble and disperse. Fig. 3 is an exemplary diagram showing a matrix structure in which the CNT aggregate 10 assembles and disperses. Here, CNTs "assemble and separate" in a CNT aggregate in which a plurality of CNTs "assemble", means a part of the CNTs assemble and separate locally, that is, a state in which the CNTs "disperse". The CNT aggregate 10 in which a plurality of CNTs 11 assemble is descriptively shown including an assembly part 15 and a dispersion part 17 in Fig. 3. In addition, in Fig. 3, an assembly part 15a and an assembly part 15b are mutually dispersed.

Because the CNNT aggregate 10 related to the present embodiment is arranged with a matrix structure in which CNTs 11 assemble and disperse, a path if formed between CNTs along which electricity flows. As a result, the CNT aggregate 10 arranged with an assembled and dispersed matrix structure is suitable for manufacturing the CNT metal composite 100 having excellent conductivity. In addition, it is possible to form spaces in the dispersion part 17 in the CNT aggregate 10 which can be adhered with the metal 20. In this way, in the CNT aggregate 10 in which CNTs are present at a high density with a pore diameter distribution maximum of 50 nm or less, as is shown in Fig. 1 and Fig. 2, the CNT metal composite 100 can include a structure in which the metal 20 is adhered not only to the external surface of the CNT aggregate 10 but also the CNT 11 within the CNT aggregate 10 and it is possible to manufacture the CNT metal composite 100 in which a large amount of CNTs are filled. Furthermore, in the assembly part 15, because CNTs closely contact each other, it is possible to flow electricity between the CNTs and therefore manufacture a CNT metal composite having excellent conductivity such as the CNT metal composite 100.

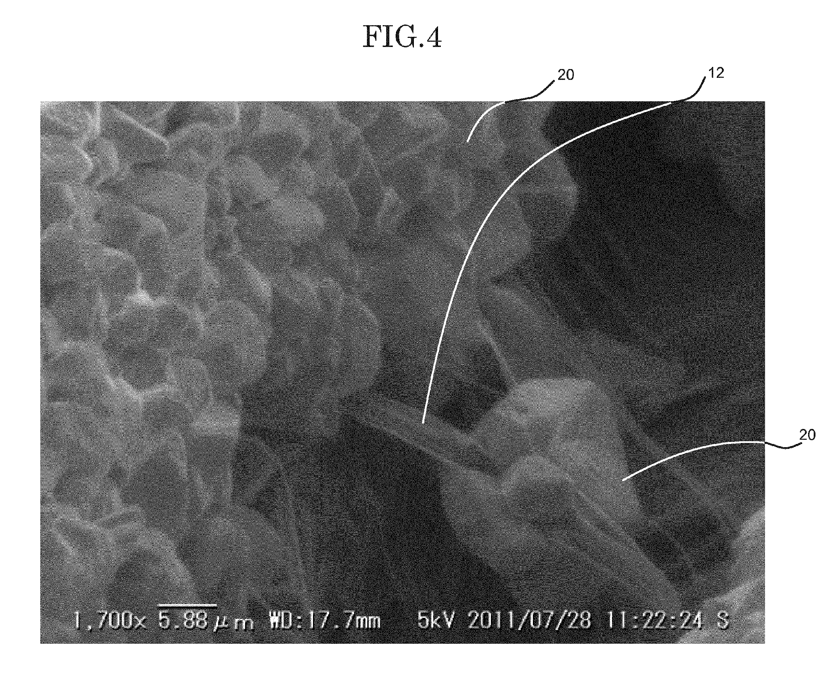

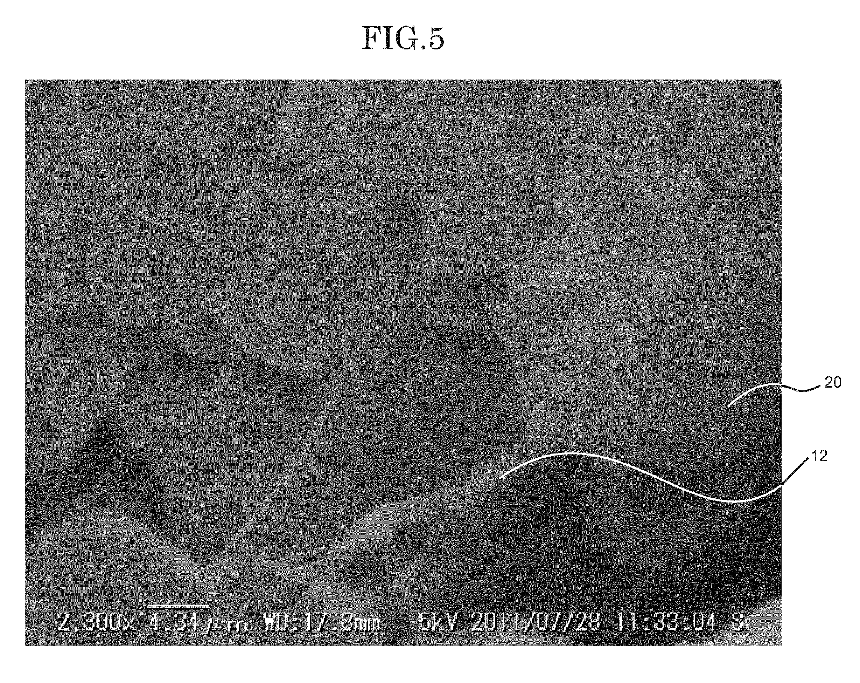

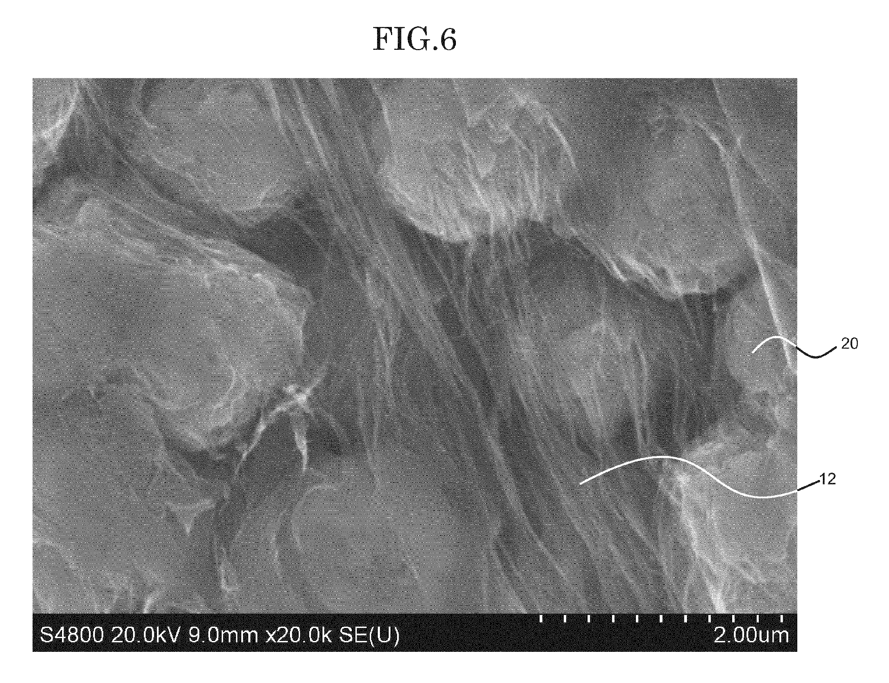

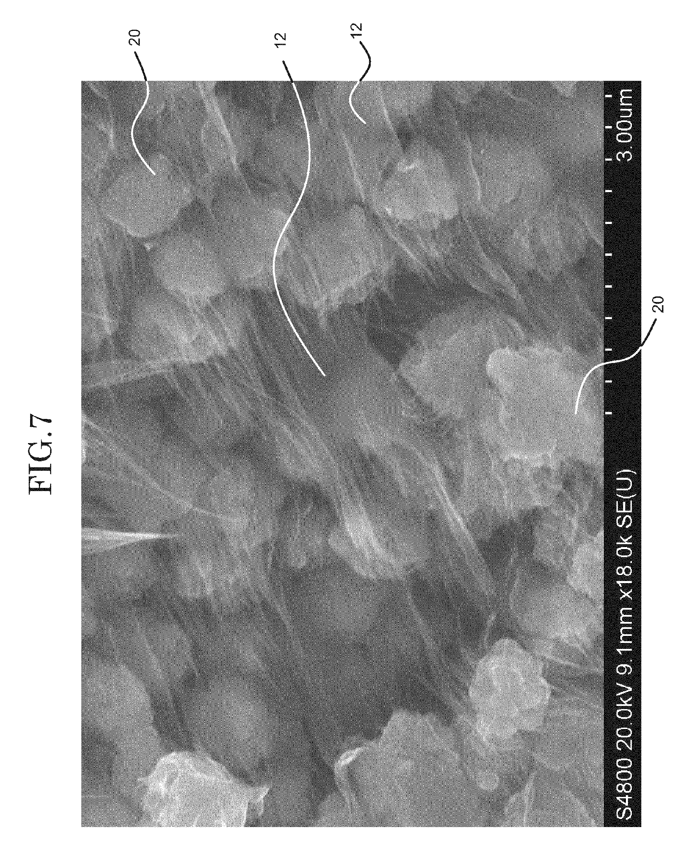

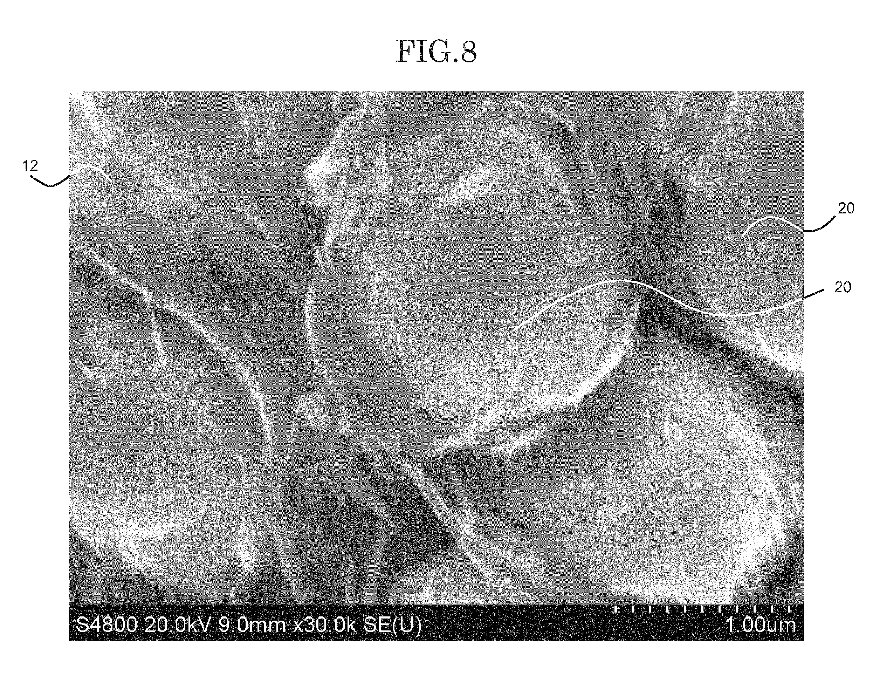

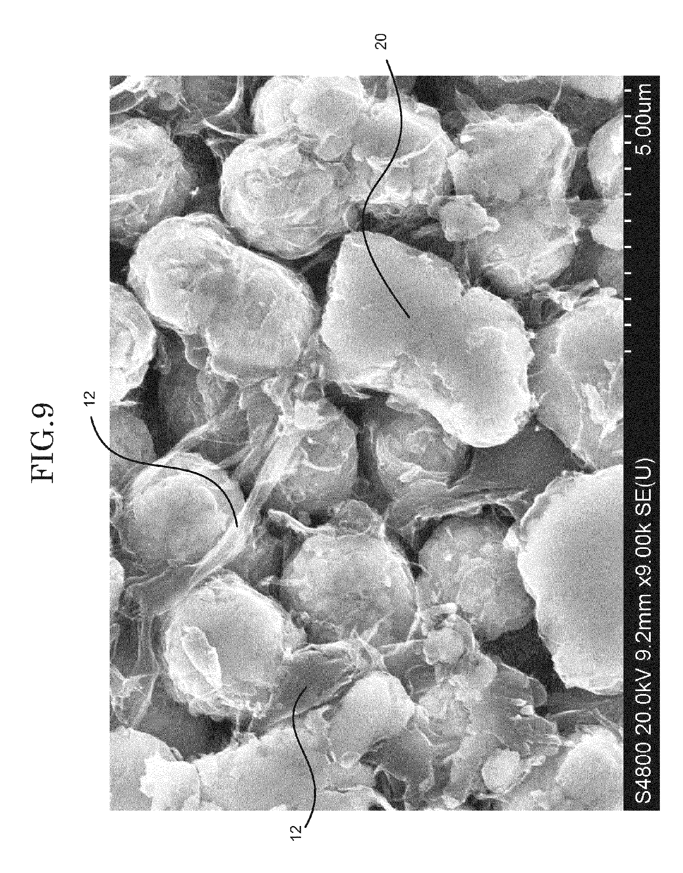

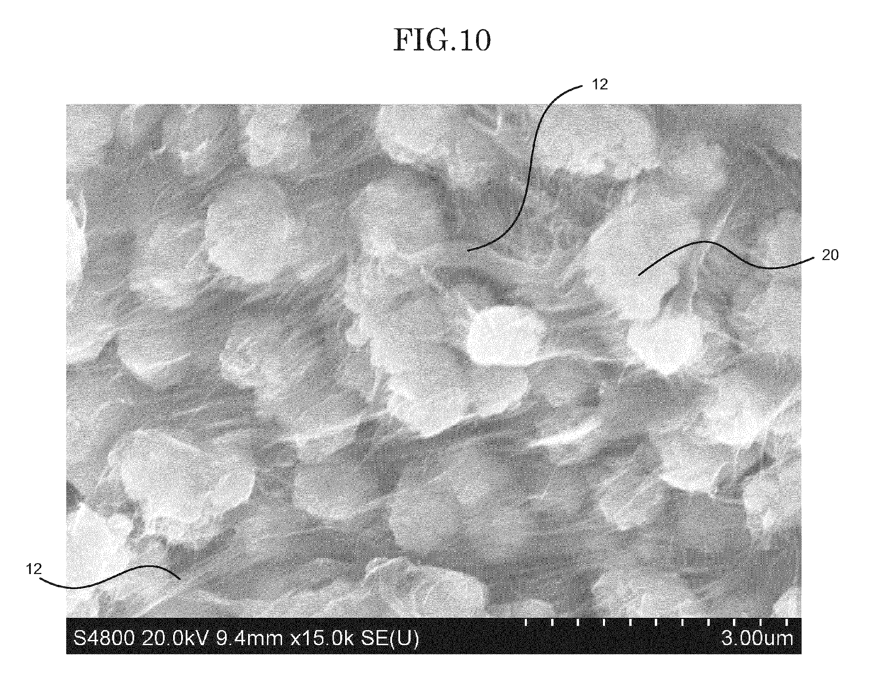

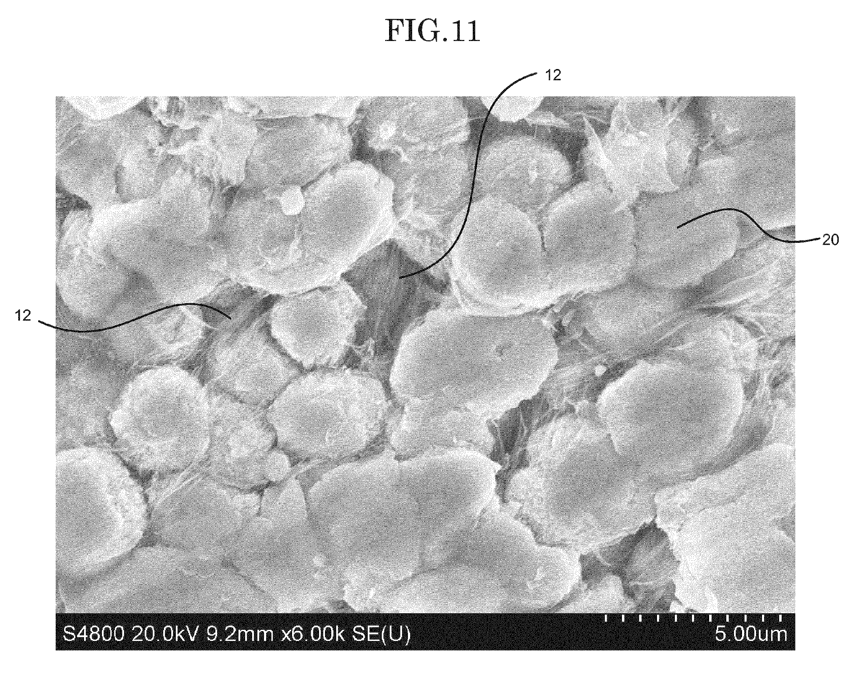

It is preferred that the CNT metal composite 100 related to the present embodiment is arranged with a matrix structure in which CNTs 11 assemble and disperse in order to provide excellent conductivity. In the conventional technology, because a matrix structure in which CNTs assemble and disperse is not provided, it is not possible to adhere metal to the CNTs up to the interior of the CNT aggregate or form a path to allow electricity to flow between the CNTs under conditions where CNTs are present at a high density with a pore diameter distribution maximum of 50 nm or less. As a result, in the conventional technology, it was difficult to manufacture a CNT metal composite having excellent conductivity such as the CNT metal composite 100. The CNT metal composite 100 is preferred to be arranged with fiber shaped CNT 12 in which a plurality of CNTs 11 are bundled together. When the fiber shaped CNT 12 is arranged with a plurality of CNTs 11 bundled together, pairs of CNTs can be easily formed in a continuous structured body which is suitable for the manufacture of a CNT metal composite having excellent conductivity. It is possible to observe the fiber shaped CNT 12 shown in Fig. 4 to Fig. 11 from an SEM image of an internal cross section 100 of the CNT metal composite 100 manufactured in Example 1.

Here, the fiber shaped CNT 12 is preferred to have a length of 2 µm or more and more preferably 3 µm or more. It is easy to form the CNTs 11 in a continuous structured body in the CNT metal composite 100 arranged with this long fiber shaped CNT 12 having excellent conductivity.

Although the CNT metal composite 100 is formed from a composite of the CNT 11 and the metal 20, various adhering forms are possible depending on the thickness and aggregate density of the CNT 11 and amount of metal 20. That is, in the case where the amount of metal 20 is relatively small, the CNT composite has an adhering structure where the metal is attached to the periphery or interior side of the CNT 11, and in the case where the amount of metal 20 is relatively high, the CNT composite has a shape where metal particles merge to form large particles which cover the CNT 11 or the aggregated CNTs (CNT aggregate). In this case, the composite has an adhering structure which appears that the CNT 11 (CNT aggregate) becomes buried within large particles of the metal 20. In the present invention, this structure is referred to as an adhering structure.

In addition, the CNT aggregate 110 is arranged with a CNT which adhere the metal 20 to the surface of CNTs which forms the CNT matrix structure. Adhering may be widely interpreted as meaning at least one part of a CNT contacting the metal 20, at least one part of a CNT covering the metal 20, at least one part of a CNT attached so as to cover and wrap the metal 20, at least a part of a CNT attached to cover a film on the surface of the metal 20, and at least a part of a CNT contacts and inter-posits the surface of the metal 20. In the present specification, adhering not only refers to coating so as to completely cover the CNT matrix structure but also refers to at least one part of the metal 20 being adhered continuously on the CNT 11 on the exterior and interior of the CNT aggregate 10. Fig. 2 and Fig. 4 to Fig. 11 are SEM images of the internal cross section 100b of the CNT metal composite 100 manufactured in Example 1. The metal 20 appears at first glance to be a dispersed particle shaped body, however, the metal 20 extends deep into the composite and pairs of metal 20 form a continuous structured body. Because a good interface surface can be formed between the CNT 11 and the metal 20 in the CNT metal composite 100 related to the present embodiment by adhering the metal 20 to the surface of a CNT which forms the CNT matrix structure, this is suitable for manufacturing a CNT metal composite having excellent conductivity.

The metal 20 on the interior of the CNT metal composite 100 is preferred to be arranged with a particle shape having a size of 0.5 µm or more and more preferably 1 µm or more. The CNT metal composite 100 arranged with this type of large particle shape shows excellent conductivity since pairs of metal 20 can easily be formed in a continuous structured body. Here, the size of the particle shape of the metal 20 can be estimated by calculating the size of the particle shaped metal 20 from an SEM image of the interior of the CNT metal composite observed at a magnification of 15,000 times. For example, the area of particle shape is analyzed by a public domain image processing software (image J) and the size of the particle shape can be calculated by calculating a two dimensional area.

The CNT metal composite related to the present embodiment is preferred to include a structure in which at least a part of a plurality of CNTs is orientated. The CNT aggregate 10 has high orientation since an orientated CNT aggregate (referred to below as CNT orientated aggregate) is used as a material. The CNT metal composite 100 including a structure in which at least a part of a plurality of CNTs is orientated has good conductivity in the orientation direction of the CNT 11. However, in the case of patent document 1 or patent document 2 in which CNTs are plate by dispersion in an electrolyte solution, because a structure is not included in which a part of the CNTs is orientated as in the CNT metal composite 100 good conductivity in the orientation direction of the CNT is not shown.

### (Metal)

Here, the metal used in the plating of the CNT metal composite 100 related to the present embodiment is explained. In the present specification, metal plating means metal which can be plate processed. The meal used in the plating of the CNT metal composite 100 can be selected from gold, copper, silver, nickel, zinc, chrome, platinum, tin or an alloy of these or solder. Although there is no limitation to the metal related to the present embodiment, because these metals have high conductivity, they can be favorably used in plating the CNT metal composite 100. In particular, because copper has high conductivity and is cheap compared to noble metals it can be favorably used as an industrial material.

### (Substrate)

The CNT metal composite 100 related to the present embodiment can be formed by being mounted on a substrate. There is no particular limitation to the substrate related to the present embodiment as long as the substrate can be mounted with the CNT aggregate 10. The substrate may be formed for general wiring or circuits and can be a semiconductor substrate such as a silicon, a silicon carbide (SiC), sapphire, gallium phosphide (GaP), gallium arsenide (GaAs) wafer,, indium phosphide (InP), gallium nitride (GaN), or glass, a metal substrate such as stainless steel such as SUS304 or YEF42-6 alloy having conductivity, or a plastic substrate such as polyarylate (PAR), polyethersulfone (PES), polycarbonate (PC), polyimide, polyethylene naphthalate (PEN), or polyethylene terephthalate (PET). However, because the CNT metal composite 100 has conductivity, the substrate related to the present embodiment is preferred to be arranged with a surface having insulation properties for mounting at least the CNT metal composite 100. By mounting the CNT metal composite 100 on a substrate arranged with a surface have insulation properties it is possible to pattern the CNT metal composite 100 and form wiring or circuits.

In addition, the CNT metal composite 100 is preferred to be mounted on a substrate so as to control the position and/or orientation of the CNT aggregate 10. As explained previously, the CNT metal composite 100 including a structure in which at least a part is orientated has good conductivity in the orientation direction of the CNT 11. As a result, controlling the position and/or orientation of the CNT aggregate 10 and mounting on a substrate is important for providing high conductivity to wiring or circuits. However, a conventional composite which is plated by dispersing CNTs in an electrolyte solution does not include a structure in which a part of the CNT is orientated such as the CNT metal composite 100 and therefore high conductivity cannot be provided to wiring or circuits by controlling the position and/or orientation of the CNT.

### (Structured Body)

The CNT metal composite 100 related to the present embodiment can include a structure arranged with a first part contacting a substrate, a second part separated from the substrate, and a third part linking the first part and the second part. Fig. 4 (a) and Fig. 4 (b) are conceptual diagrams of this structure. In Fig. 4 (a), the CNT metal composite 100 is structured from a first part 101 which contacts a substrate 150, a second part 103 which is separated from the substrate 150 by a space 191 (in this example, separated from the upper surface of the substrate 150), and a third part 105 which is curved and links the first part 101 and second part 103. In addition, the CNT metal composite 100 can be formed by positioning the second part 103 lower than the first part 101 which contacts the substrate 150 and forming a step part 193 at an appropriate part of the substrate 150 as is shown in Fig. 4 (b).

As explained previously, a plurality of CNTs 11 which formed the CNT aggregate 10 related to the present invention includes high orientation (anisotropy). Therefore, the axis of the CNT aggregate 10 faces a constant direction and each orientation axis in the first part 101, second part 103 and third part 103 are linked. Furthermore, because the CNT 11 is arranged with a dispersed matrix structure, the orientation demanded by the CNT 11 allows electrolyte plating to be performed but does not always have to be complete as long as uniformity, maintenance of shape and shape processing of the CNT structure body 10 is allowable to a certain extent for realizing wiring or circuits.

Because the CNT structured body 10 related to the present embodiment can self-maintain an optional solid shape, it is possible to maintain a floating end part which is the second part 103 or an intermediate part which is the third part 103 in a separated state from the substrate 150 without forming a support part such as a concave or convex part on the substrate 150. In addition, it is possible to displace the floating part 103 or intermediate part 105 according to a direction in which the two are affected by an external force and return the two to their original state when the external force is removed. Therefore, wiring or circuits can be arranged three dimensionally on the surface of the substrate 150, and the CNT metal composite 100, coupled with mechanical and electrical properties, can be favourably used on a substrate having a flat surface for forming an integrated circuit as a structural component of a MEMS device such as wiring, a switch, relay, probe or electronic device. However, because a conventional composite which is plated by dispersing CNTs in an electrolyte solution does not include a structure in which a part of the CNT is orientated such as the CNT metal composite 100, it is difficult to arrange wiring or circuits three dimensionally on the surface of a substrate.

Because copper is oxidized when exposed to air and its conductivity drops, at least a part of the CNT metal composite 100 related to the present embodiment is preferred to be covered by a film for preventing oxidation. By covering the CNT metal composite 100 with a film for preventing oxidation it is possible to prevent oxidation even after manufacture and maintain high conductivity. Here, any known film for preventing oxidation can be used as long as the film prevents oxidation of the CNT metal composite 100. A resin, a metal difficult to oxidize or a non-conducting body can be exemplified as a material of the film for preventing oxidation.

As described herein, because the CNT metal composite related to the present embodiment has high conductivity and can be patterned, it is possible to use the composite as a conductive material or wiring. In addition, it is possible to manufacture a circuit by arranging wiring formed by the CNT metal composite 100 at predetermined intervals. Because the CNT metal composite 100 has high conductivity the composite is suitable for the manufacture of various types of circuits.

### (Manufacturing Method)

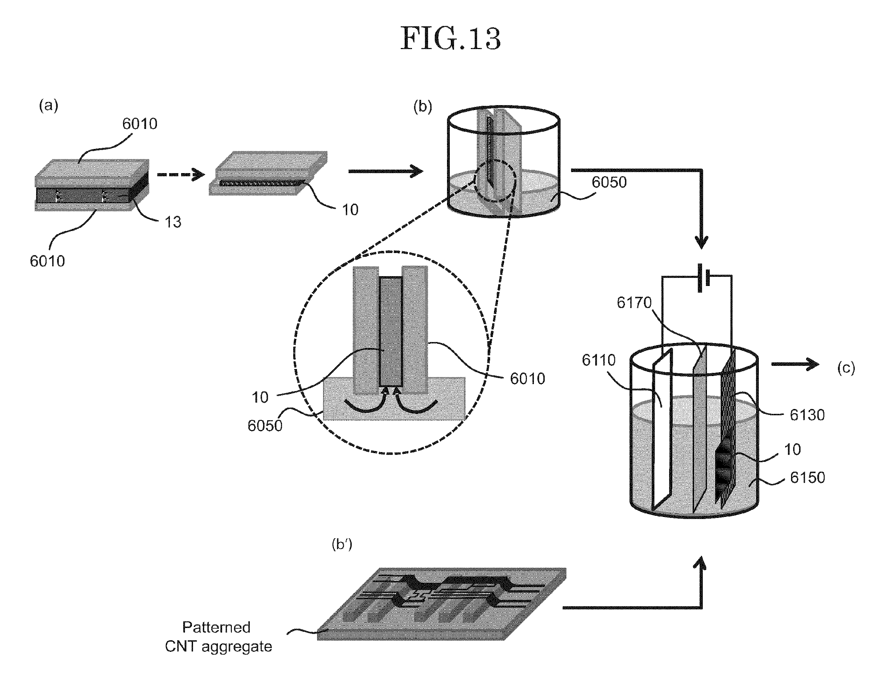

A manufacturing method of the CNT metal composite 100 related to the present embodiment is explained below. Fig. 13 is an exemplary diagram showing a manufacturing method of the CNT metal composite 100. Manufacture of the CNT metal composite 100 is arranged with (a) a step of preparing the CNT aggregate 10 having a maximum pore size distribution of 50 nm or less calculated using the BJH method from the adsorption isotherm using nitrogen liquid, (b) a first electrolyte plating step in which the CNT aggregate 10 is immersed in an electrolyte plating solution and electrolyte plated and (c) a step of annealing the electrolyte plated CNT aggregate 10.

The step of preparing the CNT aggregate 10 (a) includes a step of manufacturing and shearing a CNT aggregate 13 comprised from the CNT 11. The first electrolyte plating step in which the CNT aggregate 10 is immersed in an electrolyte plating solution and electrolyte plated (b) includes immersing the prepared CNT aggregate 10 in a solution dissolved with metal salt up to the interior of the CNT aggregate 10, performing electrolyte plating and attaching metal up to the interior of the CNT aggregate 10. The step of annealing the electrolyte plated CNT aggregate 10 (c) includes annealing the CNT aggregate 10 in a reduction gas atmosphere and reducing the oxidized metal attached to the CNT aggregate 10.

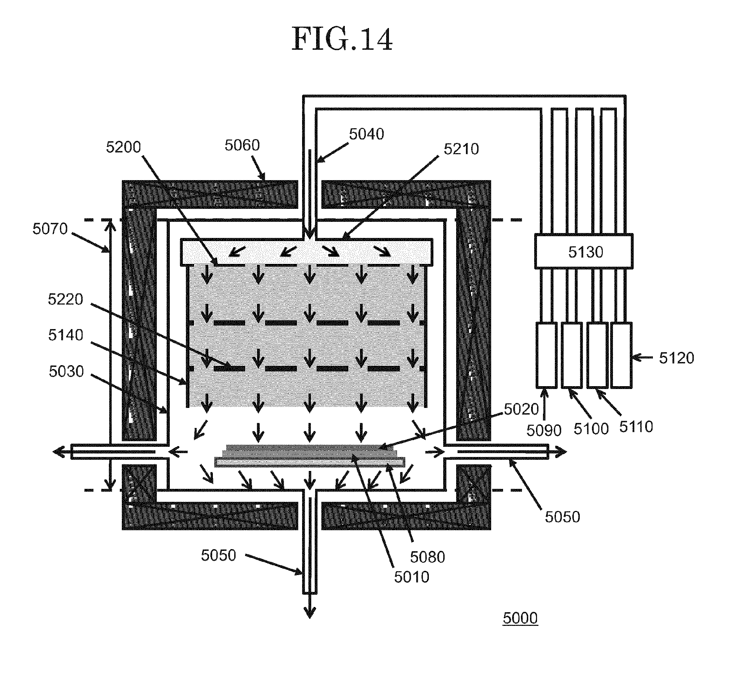

Although there is not limitation to the step of preparing the CNT aggregate 10 as long as the obtained CNT aggregate satisfies the conditions stipulated in the present specification, the manufacturing methods exemplified in Patent Application 2010-544871 and Patent Application 2009-144716 are exemplified. Fig. 14 shows an example of synthesis device of the CNT orientated aggregate 13 used in the CNT metal composite 100. The synthesis device 5000 is arranged with a synthesis furnace 5030 comprised from silica glass for example which receives a substrate 5010 arranged with a catalyst layer 5020, a gas supply pipe 5040 arranged on an upper wall of the synthesis furnace 5030 and connected to the synthesis furnace 5030, a gas discharge pipe 5050 arranged on a lower wall or side wall on the down flow side and connected to the synthesis furnace 5030, a heating means 5060 arranged on the exterior periphery of the synthesis furnace 5030 and comprised from a resistance heat generating coil for example, a heating temperature adjustment means for adjusting the temperature within the furnace to a certain temperature, and a heating region 5070 within the synthesis furnace 5030 heated to a certain temperature by the heating means 5060 and heating temperature adjustment means. In addition, a substrate holder 5080 is arranged for holding the substrate 5010 arranged with the catalyst layer 5020 in the heating region 5070 within the synthesis furnace 5030 so that a heated volume becomes larger than a discharge volume.

A gas flow formation means 5210 for distributing and dispersing a source gas supplied from the gas supply pipe 5040 and forming a source gas flow which flows in a plurality of directions is arranged within the heating region 5070 above the substrate holder 5080 and/or the catalyst layer 5020. The gas flow formation means 5210 forms a source gas flow in a plurality of directions roughly parallel to the surface of the substrate 5010. In addition, a plurality of gas ejection means 5220 for forming a source gas flow in a roughly perpendicular direction to the plane of the substrate 5010 is arranged on the gas flow formation means 5210. The gas ejection means 5220 is arranged in plane roughly parallel to the surface of the substrate 5010.

By using this gas flow formation means 5210 it is possible to contact with a catalyst from a roughly perpendicular direction to the plane of the substrate 5010 after a source gas supplied from the gas supply pipe 5040 is developed and dispersed to a plane roughly parallel to the plane of the substrate 5010.

A staying time period adjustment means 5140 for increasing and/or adjusting a staying time period formed from a turbulence flow control means 5220 comprised from a plate shaped rectifier plate arranged with a plurality of holes which is connected to and linked to the gas flow formation means 5210 with a heated volume intentionally increased and/or adjusted is arranged between the gas injection means 5200 and the catalyst layer 5020.

When a heated volume of a source gas heated within the heating region 5070 is increased and adjusted to the direction in which the staying time period becomes longer, it is possible to control the attachment of carbon impurities to the CNT and thus obtain a suitable CNT metal composite 100.

Because the turbulence flow control means 5220 controls any turbulence of the source gas within the staying time period adjustment means 5140 and is suitable for controlling the generation of carbon impurities, the turbulence flow control means 5220 is favorable for obtaining the CNT metal composite 100.

The synthesis device is arranged with a source gas cylinder 5090 for receiving carbon compounds which become the source material of a CNT, a catalyst activator material cylinder 5100 for receiving catalyst activator materials, an atmosphere gas cylinder 5110 for receiving the source gas or carrier gas of the catalyst activator material, and a reduction gas cylinder 5120 for reducing a catalyst, and a carbon weight flux adjustment means 5130 which can control the supply amount of gas from each of the cylinders using gas flow device is also arranged.

Manufacture of the CNT orientated aggregate 13 of this manufacturing method for manufacturing a catalyst layer on the substrate 5010 and for chemically vapor growing (synthesis) a plurality of CNTs from the catalyst.

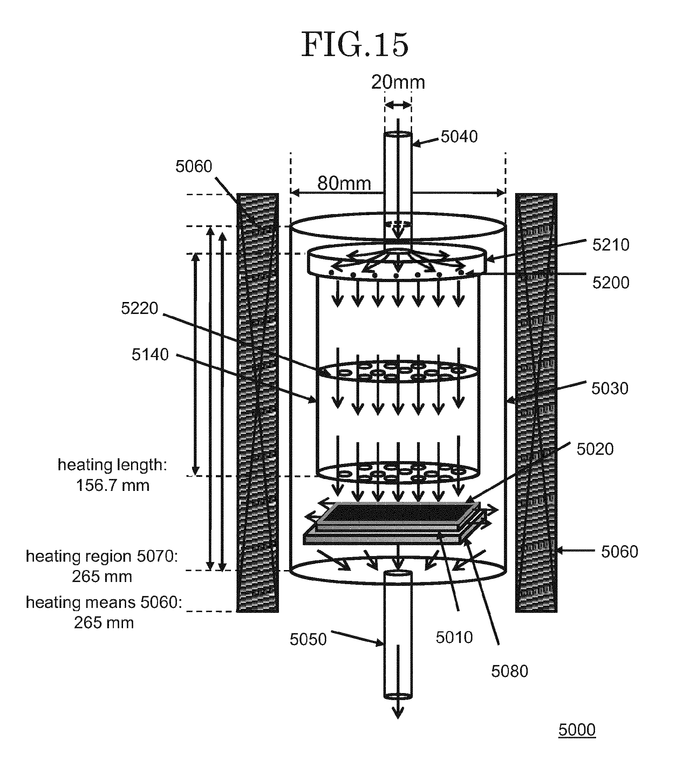

Referring to Fig. 14 and Fig. 15, first the substrate 5010 (silicon wafer for example) grown with a catalyst layer 5020 (alumina iron thin film for example) in advance in a separate process is transferred to the interior of the synthesis furnace 5030 which is filled with an atmosphere gas (helium for example) supplied from the gas supply pipe 5040, and placed into the substrate holder 5080. At this time, the substrate 5010 is arranged so that the surface of the catalyst layer 5020 and the flow path of the source gas intersect in a roughly perpendicular direction and the source gas is efficiently supplied to the catalyst.

Next, the interior of the synthesis furnace 5030 is heated to a certain temperature (750°C for example) while supplying a reduction gas (hydrogen for example) to the interior of the synthesis furnace 5030 from the gas supply pipe 5040 and a formation process is performed for maintaining this state for a desired time period.

Next, the supply of the reduction gas and atmosphere gas from the gas supply pipe 5040 is stopped or reduced according to a desired reaction condition for example using the carbon weight flux adjustment means 5130 and a source gas (ethylene for example), an atmosphere gas and catalyst activator material (water for example) are supplied from the gas supply pipe 5040. These gases which are supplied from the gas supply pipe 5040 are blown to the surface of the catalyst layer 5020 on the substrate 5010 in a roughly uniform amount from a roughly perpendicular direction to the plane of the substrate 5010 from an injection hole after forming a gas flow directed in a plurality of directions in a roughly parallel direction to the plane of the substrate 5010.

In addition, these gases are contacted with surface of the catalyst layer 5020 in an optimized amount using the carbon weight flux adjustment means 5130 after flowing the increased and adjusted heated volume 5150 and after optimizing the staying period of time by the staying time period adjustment means 5140, and a CNT is efficiently grown at a high speed and high yield from the catalyst microparticles attached to the substrate 5010 (growth process). Furthermore, these gases are contacted with the catalyst microparticles on the substrate 5010 at a roughly equal staying time period using the turbulence control means 5200. In addition, after contacting with catalyst layer 5020 the gases are rapidly discharged from the gas discharge pipe 5050 and the generation of carbon impurities is controlled to a minimum.

After production of a CNT is completed, in order to control the source gas, catalyst activate material and any resolvent remaining within the synthesis furnace 5030 or any carbon impurities existing within the synthesis furnace 5030 from being attached to the CNT orientated aggregate 13, only the atmosphere gas is flown and contact of impurities with the CNT orientated aggregate 13 is controlled (carbon impurities attachment control process).

In this way, a plurality of CNTs simultaneously grown from the catalyst layer 5020 on the substrate 5010 are grown in a direction intersecting the catalyst layer 5020, are orientated and a CNT aggregate 10 with a largely even height and high specific surface area and high purity is formed. Therefore, the CNT aggregate 10 in which the CNT orientated aggregate 13 is arranged at a high density can be favorable used to manufacture the CNT metal composite having high conductivity.

In this way, the obtained CNT orientated CNT aggregate 13 is peeled from the catalyst particles formed on the substrate 5010. Next, the peeled CNT orientated aggregate 13 is formed to a high density by shearing between two silicon substrate 6010 so that the CNT orientated aggregate 13 orientated in a perpendicular direction transformed in to the CNT aggregate 10 orientated in a horizontal direction. The CNT aggregate 10 manufactured in this way becomes a CNT aggregate having a maximum pore size distribution of 50 nm or less calculated using the BJH method from the adsorption isotherm using nitrogen liquid. The CNT aggregate 10 prepared in this way is used in an electrolyte plating process. In addition, in the manufacturing method of the CNT metal composite 100 related to the present embodiment, instead of a shearing process, the CNT orientated aggregate 13 orientated in a perpendicular direction may be peeled from the substrate 5010 and attached on to the silicon substrate 6010 to be orientated in a horizontal direction.

In the electrolyte plating process, first the CNT aggregate 10 is sandwiched between two silicon substrates 6010 and the end tip is immersed into a solution 6050 in which metal salt is dissolved with an organic solvent as a solvent. Metal ions are immersed to the interior of the CNT aggregate 10 by surface tension and a capillary action. In the CNT metal composite 100 related to the present embodiment, it is preferred that the metal ion solution 6050 immersed with the CNT aggregate 10 preferred use an organic solvent rather than a water based solvent. Although a water solvent is generally used for simply providing a CNT aggregate with high density, an organic solvent is used in the present invention because it is necessary to immerse metal ions up to the interior of the CNT aggregate 10 with high hydrophobic properties. In the present embodiment, in particular acetonitrile is preferred. Because acetonitrile can be used as a non-aqueous solvent of an inorganic salt, acetonitrile is suitable for immersing metal ions up to the interior of the CNT aggregate 10. In addition, as explained previously, a salt including copper is favourable as the metal salt related to the present embodiment.

Next, the CNT aggregate 10 is set to a cathode 6130, immersed into an electrolyte plating solution 6150 and electrolyte plating is performed. Because it is necessary to attach metal up to the interior of the CNT aggregate 10 with high hydrophobic properties, a metal ion solution dissolved with metal salt with an organic solvent as the solvent is used as the electrolyte plating solution 6150 related to the present invention as described above. In the present embodiment, it is possible to favourably use acetonitrile as the organic solvent and a salt including copper as the metal salt. Therefore, in the present embodiment, a high purity copper sheet is used as the anode 6110. In addition, although an insulation spacer 6170 is arranged in order to electrically separate the anode 6110 and cathode 6130 in the electrolyte plating tank 6100, the insulation spacer 6170 is generally formed from a glass fiber. In the present embodiment, it is preferred to use filter paper as the insulation spacer 6170. When electrolyte plating is performed using a glass fiber insulation spacer, the glass fiber becomes attached to the CNT metal composite 100 which is not desirable.

In addition, in the electrolyte plating process of the CNT aggregate 10, an average current density of 10 mA/cm² or less is preferred. When the average current density is high, first the exterior side of the CNT aggregate is plated but the interior side of the CNT aggregate is insufficiently plated. It is preferred that plating be performed with a low average current density in order to form a structure in which the metal 20 is also attached to the CNT 11 within the CNT aggregate 10 as in the CNT metal composite 100 related to the present embodiment.

The electrolyte plated CNT aggregate 10 is annealed in manufacture of the CNT metal composite 100. The step for annealing the electrolyte plated CNT aggregate 10 is performed in a hydrogen atmosphere. In the electrolyte plated CNT aggregate 10, conductivity is not sufficiently high since the attached metal becomes oxidized. By annealing the electrolyte plated CNT aggregate 10 in a reduction gas atmosphere such as hydrogen, it is possible to reduce the oxidized metal which is attached to the CNT aggregate 10. The temperature of the annealing process is preferred to be 100°C or more and 700°C or less and 150°C or more and 500°C or less is more preferable in the case where the CNT aggregate 10 is plated with copper. When the electrolyte plated CNT aggregate 10 is annealed at a temperature within this range, the metal does not precipitate, pairs of metal can be fused and it is possible to improve the uniformity of the CNT metal composite 100.

It is preferred that an electrolyte plating process is further arranged for immersing the CNT metal composite 100 related to the present embodiment into an electrolyte plating solution after the annealing process. By performing another electrolyte plating process of the CNT metal composite 100 after the annealing process it is possible to further bury any gaps in the metal attached the CNT aggregate 10 using the plating and improve conductivity. Furthermore, in the second electrolyte plating process, it is preferred that an electrolyte plating solution with a metal salt dissolved in a water based solvent is used. Water is preferred as the water based solvent. The electrolyte plating solution with metal salt dissolved in a water based solvent is preferred for plating metal onto metal.

In the case where a second electrolyte plating process is performed, the CNT metal composite is also annealed for a second time. Because the second annealing process is performed in the same manner as the first annealing process described above, a detailed explanation is omitted here. Using the manufacture process described above it is possible to manufacture the CNT metal composite 100 related to the present embodiment with excellent conductivity.

### (Manufacturing Method of a Plate Shaped Metal Composite)

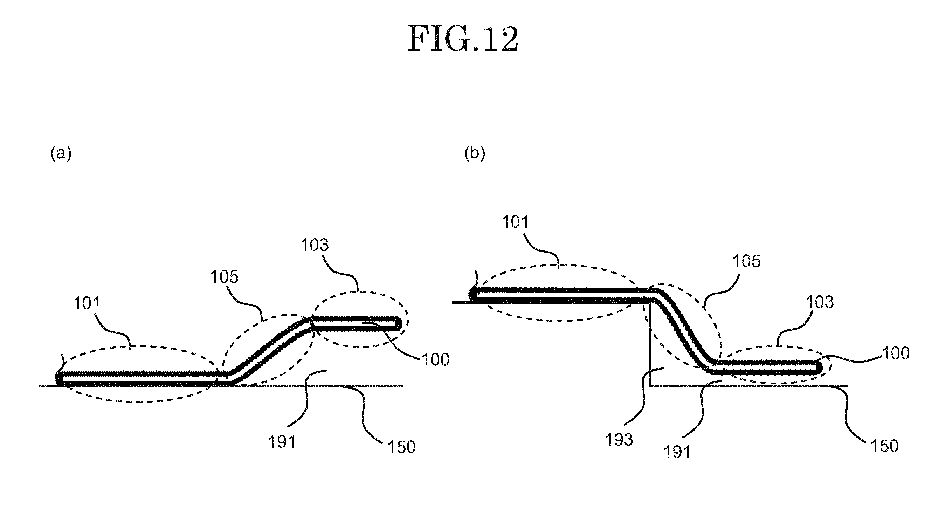

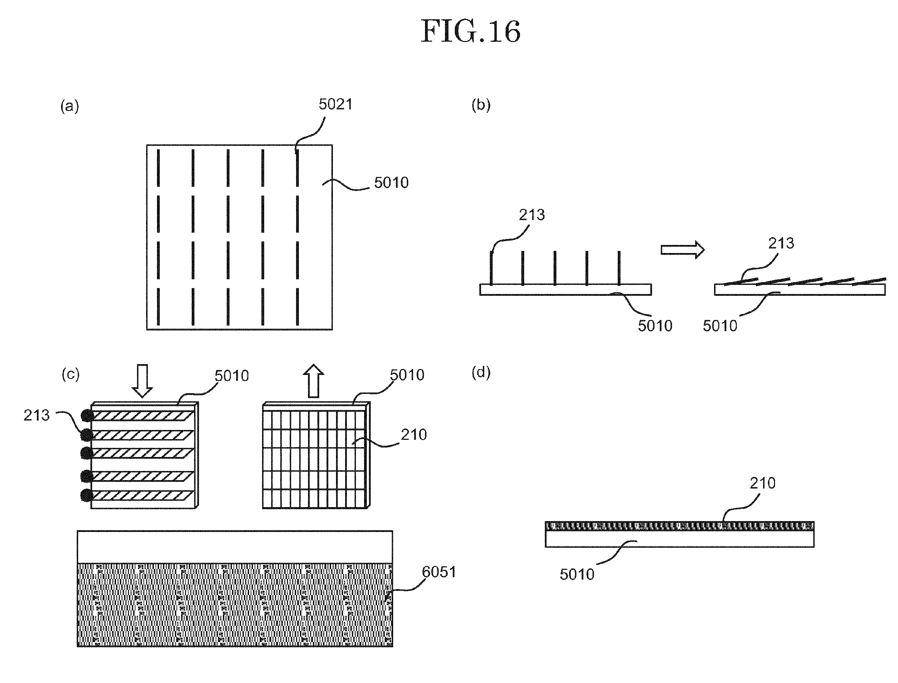

As described above, the CNT metal composite 100 related to the present invention can be patterned. A patterned CNT metal composite related to the present invention can be manufactured by patterning a CNT aggregate and performing electrolyte plating as shown in Fig. 12 (b). First, a manufacturing method of a plate shaped CNT metal composite 200 is explained. The plate shaped CNT metal composite 200 is manufactured by electrolyte plating a plate shaped CNT aggregate 210. Fig. 16 is an exemplary diagram showing a manufacturing process of the plate shaped CNT aggregate 210. In the step of preparing the CNT aggregate 10 described above, the method described in Patent Application 2008-038029 for example can be used. A plate shaped CNT aggregate 213 is synthesized using a patterned catalyst layer and it is possible to manufacture the plate shaped CNT aggregate 210 on a substrate by performing a CNT lodging process. In the manufacturing process of the plate shaped CNT aggregate 210 of the present embodiment, the film thickness of a catalyst layer 5021 shown in Fig. 16 (a) can be set to an optimum value according to the metal used as the catalyst, for example, in the case where iron is used as the metal, a film thickness of 0.1 nm or more and 100 nm or less is preferred. The width of the catalyst layer 5021 can be set according to a desired thickness of a patterned wiring which is eventually used and is set to a value about 5∼20 times the thickness of the plate shaped CNT aggregate 210 after high density processing.

Here, intervals between pairs of catalyst layers 5021 having a straight line pattern are set according to a desired height (orientation direction dimension of the CNT) of the CNT orientated aggregate 213. However, at least the CNT orientated aggregate 213 which grows from the catalyst layer 5021 bends from an edge and dimensions for being able to lodge against the surface of the substrate 5010 are necessary. In addition, there is a correlation between the orientation direction dimensions and film thickness dimensions of the CNT orientated aggregate 213 and when grown to an extreme thickness, the floating end part of the CNT orientated aggregate 213 which has a film shape may partially curl or continuity of the extension direction of the straight line pattern catalyst layer 5021 is lost and therefore it is sometimes difficult to obtain a plate shaped CNT aggregate 210 with flat surface having a continuous and uniform thickness. On the other hand, although there is no upper limit to the film thickness of the plate shaped CNT aggregate 210 after a high density process, when the thickness of the CNT orientated aggregate 213 before a high density process is excessive, it may be difficult for the CNT orientated aggregate 213 to be lodged to the substrate 5010 in the CNT lodging process (described below). In either case, the width of the straight line pattern catalyst layer 5021 and intervals between pairs of catalyst layers 502 may be appropriately set considering the thickness and surface area of the CNT orientated aggregate 213 according to the purpose of the plate shaped CNT aggregate 210.

Furthermore, when the dimensions of the orientation direction of the CNT orientated aggregate 213 are smaller than the interval between catalyst layers 5021, the CNT orientated aggregate 213 is no longer continuous and when the same dimensions are large, the amount of overlap between the base part and floating parts of mutually adjacent CNT orientated aggregates 213 increases and in either case, the flatness of the surface is lost.

In the CNT lodging process, as is shown in Fig. 16 (b) and Fig. 16 (c), after immersing the entire substrate 5010 on which the CNT orientated aggregate 213 is formed with a plurality of CNTs grown simultaneously in the same direction in the solution 6050, the CNT orientated aggregate 213 manufactured under the conditions described above is pulled up at a constant rate from the solution 6051. Then, as is exemplary shown in the diagram on the right side of Fig. 16(b) and the diagram on the right side of (c), the CNT orientated aggregate 213 is lodged on the substrate 5010. In this way, the surface of the substrate 5010 is covered by a plurality of orientated aggregates 213 and the plate shaped CNT aggregate 210 is obtained.

Here, it is preferred to use a solution which does not contain any remaining components when the CNT is dried after moistening as the immersion solution 6051. It is possible to use water, alcohols (IPA, ethanol, methanol), acetones (acetone), hexane, toluene, cyclohexane, dimethylformamide (DMF), etc as the liquid 6051. In addition, the time in which the CNT orientated aggregate 213 is immersed in the solution 6051 should be sufficient for gas bubbles to evenly leak from the entire interior of the CNT orientated aggregate 213.

Furthermore, it is possible to impregnate the solution 6051 using a spray etc after pressing the CNT orientated aggregate 213 to the surface of the substrate by applying pressure using a roller or press plate as a means of lodging and providing high density to the CNT orientated aggregate 213. However, when the CNT orientated aggregate 213 is lodged by firmly pressing a solid, force is concentrated locally and the CNT receives damage and because defects are generated by attaching a part of or the entire CNT orientated aggregate 213 to a firmly pressed solid, the means for immersing in the solution 6051 described above is preferred.

The entire volume of each pair of closely attached CNTs constricts slightly when the CNT orientated aggregate 213 is immersed in the solution 6051 and as a result the CNT aggregate 210 with high density is formed. At this time, there is almost no surface area constriction of the surface parallel to the substrate 5010 due to contact resistance with the substrate 5010 but slight constriction occurs in the thickness direction of the CNT aggregate 210. As a result, the orientation state does not change during the high density process and this orientation state is inherited unchanged during growth. The CNT aggregate 210 is dried in order to be patterned. It is possible to use natural drying under a nitrogen atmosphere at room temperature, vacuum drying or heating under the presence of an inactive gas such as argon as a means of drying the CNT aggregate 210.

Using each process described above the substrate 5010 mounted with the CNT aggregate 210 comprising a plurality of CNT orientated aggregates 213 orientated in a parallel direction to the surface of the substrate 5010 is complete.

The CNT aggregate 210 obtained in this way becomes as CNT aggregate having a pore diameter distribution maximum of 50 nm or less measured using a BJH method from an adsorption curve using liquid nitrogen.

Although the thickness of the CNT aggregate 210 can be arbitrarily set to a desired value depending on the purpose of a beam shaped body, when the thickness is 10 nm or more, it is possible to maintain uniformity of a film and obtain the required conductivity in addition to displaying the functions of an electronic device or MEMS device. Although there is no particular upper limit of this film thickness, in the case where the present invention is used as a wiring beam shaped body, the thickness is preferred to be in a range of about 100 nm or more and 50 µm or less.

By performing electrolyte plating using the electrolyte plating process described above on the plate shaped CNT aggregate 210 manufactured in this way, it is possible to manufacture a plate shaped CNT metal composite 200. Furthermore, because it is possible to apply the processes already explained above, an explanation of the details of the electrolyte plating process is omitted.

### (Pattern Formation Method)

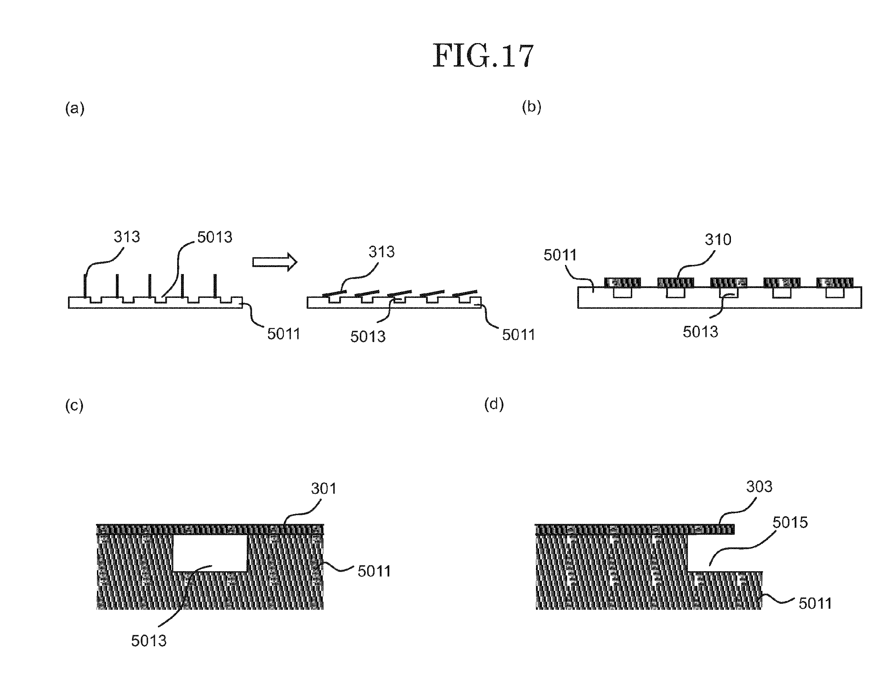

Next, a method of manufacturing a CNT metal composite 300 formed by patterning a CNT aggregate is explained. For example, a CNT orientated aggregate 313 is synthesized on the upper part surface of a substrate 5011 formed in advance with a concave part 5013 as is shown in Fig. 17 (a), and it is possible to manufacture a plate shaped CNT aggregate 310 bridged on the upper part of the concave part 5013 shown in Fig. 17(b). It is possible to control wiring or circuits by patterning the plate shaped aggregate 310. A patterning method is explained below. In a patterning process, a resist layer of a predetermined pattern is formed on the surface of the CNT aggregate 310, exposed parts are removed by etching from the resist layer on the CNT aggregate 310 and the resist layer is subsequently removed. In this way, the beam shaped CNT metal composite 310 bridged on both ends on the upper part of the concave part 5013 formed in advance on the substrate 5011 shown in Fig. 17 (a) or a cantilever beam shaped CNT metal composite 303 arranged with a floating end overhanging the upper part of a step 5013 formed in advance on the substrate 5011 as is shown in Fig. 17 (b) is produced.

In the present embodiment, it is possible to use reactive ion etching in the etching process of the CNT aggregate 310. The CNT aggregate which is pattern formed can be manufactured into the pattern formed CNT metal composite 300 related to the present embodiment by performing electrolyte plating using the electrolyte plating process described above. Because it is possible to use the method described above, an explanation of the details of the electrolyte plating process is omitted.

In addition, in the manufacturing method described above, although it is possible to use the substrate 5011 grown with the CNT orientated aggregate 313 as the substrate 5011 arranged with the beam shaped CNT metal composite 301 or 303 unchanged, in the present invention it is possible to use the substrate 5011 arranged with the beam shaped CNT metal composite 301 or 303 as a second substrate (not shown in the diagram) different to the substrate 5010 grown with the CNT orientated aggregate 313. In the case where a beam shaped body is arranged on the second substrate, the CNT orientated aggregate 313 grown in a plate shape and orientated in a perpendicular direction is extracted from the surface of the grown substrate 5010. The orientation axis is arranged in parallel to the surface of the second substrate and mounted on the surface of the second substrate after exposing to the solution 6051, or the orientation axis of the plate shaped CNT orientated aggregate 313 extracted from the grown substrate 5010 is arranged parallel to the surface of the second substrate and exposed to the solution 6051 while being mounted on the surface of the second substrate. It is preferred that a solution with no remaining components after drying the CNT after being in a moistened state is used as the solution used here and the liquid described above can be favourably used. In this case, the CNT orientated aggregate 313 extracted from the grown substrate 5010 may be mounted on the surface of the second substrate instead of the lodging process described above. Here, needless to say that the concave part 5013 or step part 5015 can be formed in advance according to necessity on the second substrate.

The high density process performed while the CNT orientated aggregate 313 exposed to the solution 6051 is mounted on the surface of the second substrate or forming a resist of a predetermined pattern on the surface of the CNT layer already subject to a high density process on the surface of the second substrate and removing the resist layer after removing the exposed parts from the resist on the CNT layer by etching is basically the same as the manufacturing processes described above.

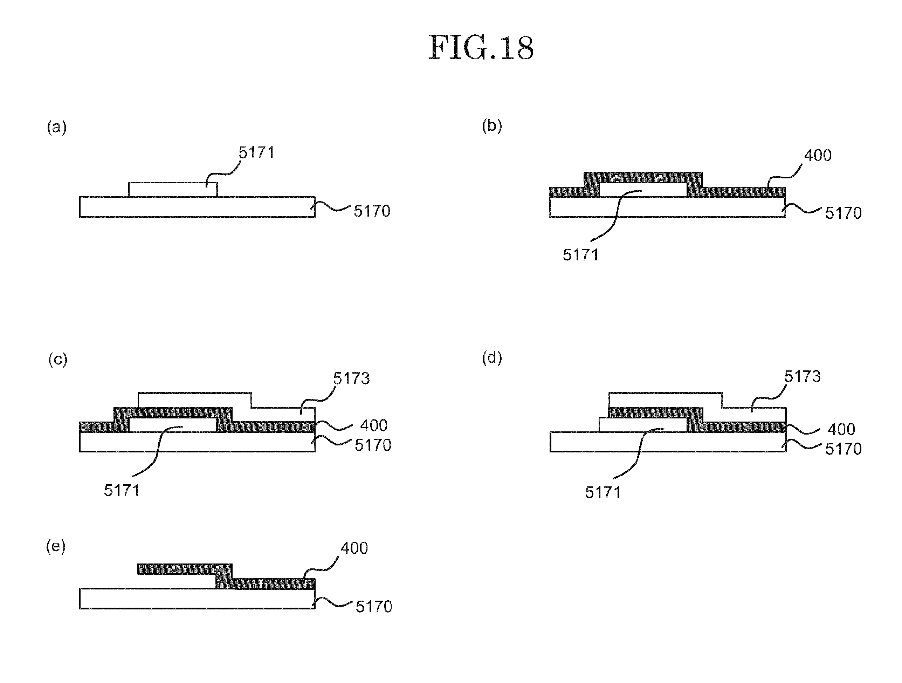

In addition, a manufacturing method of a CNT metal composite including a structure arranged with a first part contacting the substrate, a second part separated from the substrate and a third part linking the first part and the second part shown in Fig. 12 are explained. Fig. 18 is an exemplary diagram which shows a manufacturing method of a CNT metal composite 400 including a structure arranged with a first part contacting the substrate, a second part separated from the substrate and a third part linking the first part and the second part.

The CNT metal composite 400 is manufactured by mounting the CNT aggregate 110 or 210 (referred to herein as CNT aggregate 410) plated as described above on a second substrate 5170 arranged with a sacrificial layer 5171 as a three dimensional shaped part (Fig. 18. (a)). The sacrificial layer 5171 can be formed using a known process such as using hydrogensilsesquioxane (HSQ) for example on the upper surface of the prepared second substrate 5170.

Next, a CNT aggregate 410 highly densified by the solution 6051 is mounted on the second substrate 5170 arranged with the sacrificial layer 5171 (Fig. 18 (b)). Furthermore, the process for highly densifying the CNT aggregate 410 and the process for mounting the aggregate can be performed in any order with the same result, the solution 6051 may be soaked into the CNT aggregate 410 using a spray etc after mounting the CNT aggregate 410 on the second substrate 5170 or the CNT aggregate 410 immersed in the solution 6051 can be lifted from the solution and mounted on the second substrate 5170. Preferably, considering ease of positioning the CNT aggregate 410 on the second substrate 5170, the CNT aggregate 410 is immersed in the solution 6051 which exists on the second substrate 5170 while a drop shape is maintained by surface tension then mounted and positioned. In this way, when the CNT aggregate 410 is mounted while a certain amount of the solution 6051 is dripped onto a part arranged with the sacrificial layer 5171 on the second substrate 5170, because the solution 6051 penetrates into the CNT aggregate 410, it is possible to perform the process for highly densifying the CNT aggregate 410 and the process for mounting the aggregate at the same time. Furthermore, the solution 6051 is described above and therefore an explanation is omitted here.

As is shown in Fig. 18 (b), the surfaces of the second substrate 5170 and the sacrificial layer 5171 are covered with no gaps by the CNT aggregate 410 at the contours of the surfaces. Here, the CNT orientation direction of the CNT aggregate 410 at the parts which directly contact the surface of the second substrate 5170 and the surface of the sacrificial layer 5171 is parallel to the surface of the second substrate 5170.

Next, the CNT aggregate 410 impregnated with the solution 6051 is dried, that is, any liquid attached to the CNT aggregate 410 is evaporated. It is possible to use natural drying under a nitrogen atmosphere at room temperature, vacuum drying or heating under the presence of an inactive gas such as argon as a means of drying the CNT aggregate 410.

When the CNT aggregate 410 is exposed to the solution 6051, pairs of CNTs come into close contact and the entire volume slightly constricts, the level of close contact further increases with evaporation of the liquid constricting the volume even further and as a result the CNT aggregate 410 is highly densified. At this time, there is only constriction in the thickness direction but almost no constriction in a direction parallel with the surface of the silicon second substrate 5170 and sacrificial layer 5171 due to contact resistance with the silicon second substrate 5170 which includes the sacrificial layer 5171 and high densification is performed while the orientation state and three dimensional state during growth are maintained. At the same time, strong mutual effects operate between the highly densified CNT aggregate and the silicon second substrate 5170 and sacrificial layer 5171 and the CNT aggregate 410 becomes rigidly attached to the silicon second substrate 5170 and sacrificial layer 5171.

The reason why the CNT aggregate 410 only constricts in the thickness direction in the shape fixing process described above is estimated to be because surface tension is generated when liquid enters between CNTs causing constriction. Therefore, a method for high densification in the shape fixing process is not limited to the method described above if the method produces surface tension between the CNTs, for example it is possible to apply a method which uses high temperature vapour etc.

In the following removal process of unnecessary parts, a mask 5173 is formed on the surface of the CNT aggregate 410 highly densified and fixed in a predetermined three dimensional shape in the shape fixing process (Fig. 18 (c)). Chrome is preferred as the mask related to the present embodiment as described above. Next, part exposed from the mask of the CNT aggregate 410, that is, unnecessary parts, are removed by etching (Fig. 18 (d)). Here, CNT hachure lines are removed cleanly by introducing Ar.

Finally, the surface layer of the mask 5173 and the sacrificial layer 5171 are removed, cleaning is performed and a CNT structure body unified a base end part (first part) contacting the second substrate 5170 and a cantilever beam part (second part) separated from the second substrate 5170 via a curved shaped part (third part) can be obtain (Fig. 18 (e)).

It is preferred that supercritical drying is used to dry the cleaning liquid. In this way, because surface tension does not operate at the interface with the CNT when the cleaning liquid evaporates, the cantilever beam part does not change shape at all and it is possible to normally maintain the shape separated from the second substrate 5170.

By performing electrolyte plating using the electrolyte plating process described above on the pattern formed CNT aggregate 410 manufactured in this way, it is possible to manufacture a pattern formed CNT metal composite 400 related to the present embodiment. Furthermore, because it is possible to apply the methods already explained above, an explanation of the details of the electrolyte plating process is omitted.

### EXAMPLES

The CNT metal composite related to the present invention explained in the embodiments described above is explained in detail below using specific examples. Furthermore, the examples below are merely examples and the CNT metal composite of the present invention and method of manufacturing the same are not limited to the these examples.

### (Example 1: CNT Metal Composite)

In the present example, a manufacturing example of the CNT metal composite 100 described above is explained. First, in the process of preparing a CNT aggregate, a CNT orientated aggregate 13 was synthesized on a silicon substrate and the CNT orientated aggregate 13 was peeled from the silicon substrate so that catalyst particles or carbon impurities are not mixed as in the manufacturing method of Patent Application 2010-544871 and Patent Application 2009-144716. The peeled CNT orientated aggregate 13 was sandwiched between two new silicon substrates with a thickness of 0.5 mm, the upper side silicon substrate was sheared while the lower side silicon substrate was held at rest and fixed using a clip. In this way, a high density CNT aggregate 10 orientated in the shear direction was obtained. The CNT aggregate 10 had a pore diameter distribution maximum of 8 nm calculated using the BJH method.

Next, as a copper ion solution with acetonitrile as a solvent, 27.5 mM of copper acetate, 200 ml of the acetonitrile was prepared, the end of the CNT aggregate 10 sandwiched between the two silicon substrates was immersed and the copper ion solution penetrated to the interior of the CNT aggregate to achieve high density. The penetrating process of the copper ion solution was performed by leaving the aggregate in a desiccator for 20 minutes.

Next, electrolyte plating was performed on the CNT aggregate 10 penetrated with the copper ion solution. The electrolyte plating process was performed using a solution 6050 (VP3 galvanostat/potentiostat/frequency response analyser, manufactured by Princeton Applied Research) arranged with an electrode in a polyester ether ketone (PEEK) resin container. A high purity copper sheet (11 mm x 50 mm) is used as an anode 6110 and the high density CNT aggregate 10 was arranged supported by a stainless steel mesh as a cathode 6130. Filter paper (14 mm x 60 mm x 0.2 mm manufactured by Advantech Inc.) was arranged between the anode 6110 and the cathode 6130 as an insulation spacer. The copper solution described above was inserted into the solution 6050 and the aggregate was left for 10 minutes in a vacuum desiccator so that copper ion solution penetrated uniformly to the CNT aggregate 10.

Electrolyte plating was performed for 72 hours at a constant current of 1 mA and a plated CNT aggregate 110 was obtained. After electrolyte plating, the plated CNT aggregate 110 was removed from the stainless steel mesh, washed with high purity acetonitrile and unreacted copper ions were removed. Following this, the plated CNT aggregate 110 was dried for 1 hour at 70°C in the vacuum desiccator.

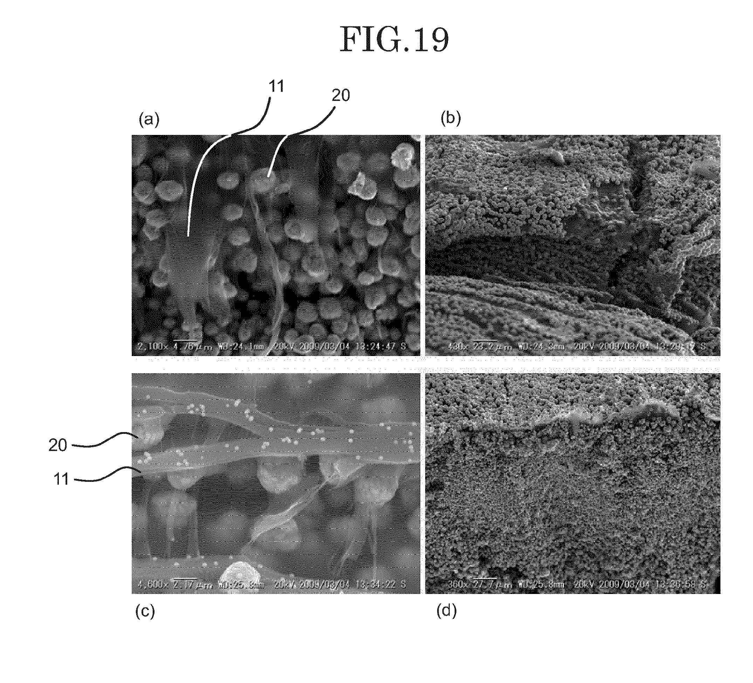

A SEM image of the electrolyte plated CNT metal composite 110 is shown in Fig. 19. Fig. 19 is a cross sectional diagram when the plated CNT aggregate is divided parallel to the orientation direction of the CNT aggregate 10. Fig. 19 (a) and Fig. 19 (b) are SEM images at high magnification and Fig. 19 (c) and Fig. 19 (d) are SEM images at low magnification. It was observed in Fig. 19 that copper nano-particles were attached up to the interior of the CNT aggregate 10 and a copper layer was formed throughout. Therefore, it was examined that penetrating the copper ion solution into the CNT aggregate before the electrolyte plating process is important for manufacturing a uniform CNT metal composite.

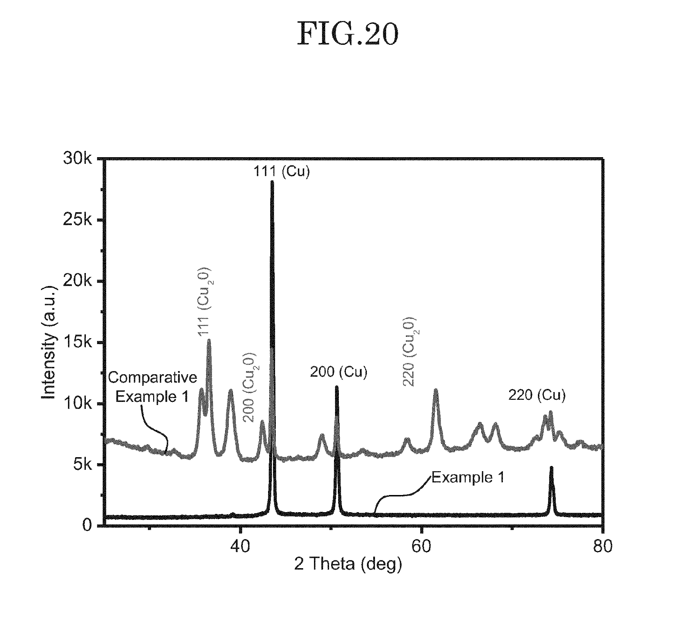

After drying, the plated CNT aggregate 110 was annealed for 3 hours in a heating furnace at 250°C under a hydrogen atmosphere (H₂) at a constant flow amount of 150 sscm and the CNT metal composite 100 related to the present embodiment was obtained. In addition, similarly in the case of annealing for 30 minutes at 200°C and 500°C, the volume resistance rate of the CNT metal composite 100 was 1.8 x 10⁻⁵ Ωcm. The volume resistance rate of the CNT metal composite 100 dropped due to the annealing process. Fig. 20 shows the measurement results of XRD of the CNT metal composite 100 after annealing as example 1 and plated CNT aggregate 110 before annealing as comparative example 1. In the present embodiment, the measurements were made at θ-2θ method using an X-ray diffraction analyzer (manufactured by Rigaku) with a 1.2kW Cu-Kα X-ray radiation source. The X-ray diffraction analysis was performed on an internal cross section 100b made by cutting the CNT metal composite 100. In the plated CNT aggregate 110 of the comparative example 1 before annealing, a peak derived from the copper oxide (I) (Cu₂O) was detected and the strength ratio between the peak derived from the copper oxide and the strongest peak (111) of copper was 0.3. In the CNT metal composite 100 of example 1 after annealing, the peak derived from the copper oxide (I) (Cu₂O) was measured at a diffraction angle of 39.1° ((200) Cu₂O)), and the strength ratio with the strongest peak (111) of copper was 100. In addition, in the CNT metal composite 100 of example 1, a typical peak in high purity copper so that a diffraction angle 2θ was in the range of 40° or more and 80° or less (111) > (200) > (220) was detected. Therefore, the copper oxide within the CNT composite was reduced to copper by the annealing process under reduction conditions and it was clear that the volume resistance rate of the CNT metal composite 100 improved without the CNT aggregate 10 receiving any damage. Furthermore, because the output of the X-ray diffraction analyzer used in the present embodiment was low, carbon derived CNT was not detected.

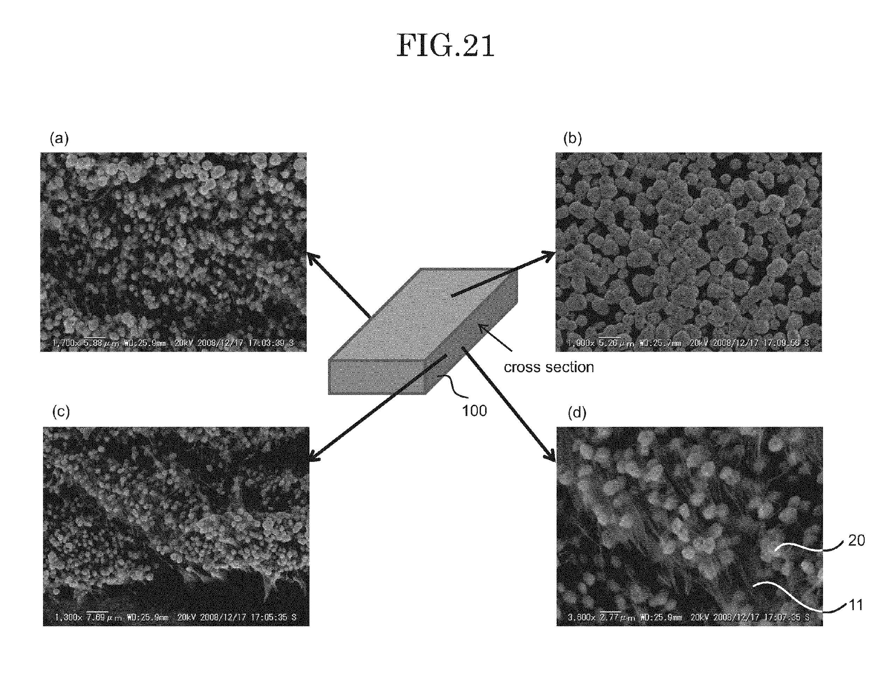

In addition, Fig. 21 shows a SEM image of the CNT metal composite 100 after annealing for 3 hours at 500°C under a hydrogen atmosphere. Fig, 21 (a) and Fig. 21 (b) are SEM images of an exterior part surface 100a of the CNT metal composite 100, Fig. 21 (c) is a SEM image at low magnification of an interior cross section 100b when the CNT metal composite 100 is cut parallel to the orientation direction of the CNT aggregate 10, and Fig. 21 (d) is a high magnification SEM image. In Fig. 21, it was clear that the volume resistance rate dropped to 1.8 x 10⁻⁵ Ωcm without the CNT aggregate 10 burning. Although annealing under a reduction atmosphere reduced the volume resistance rate of the CNT metal aggregate 100, it was clear that the volume resistance rate of the CNT metal composite did not change under an inactive gas (helium (He) in the present example) atmosphere.

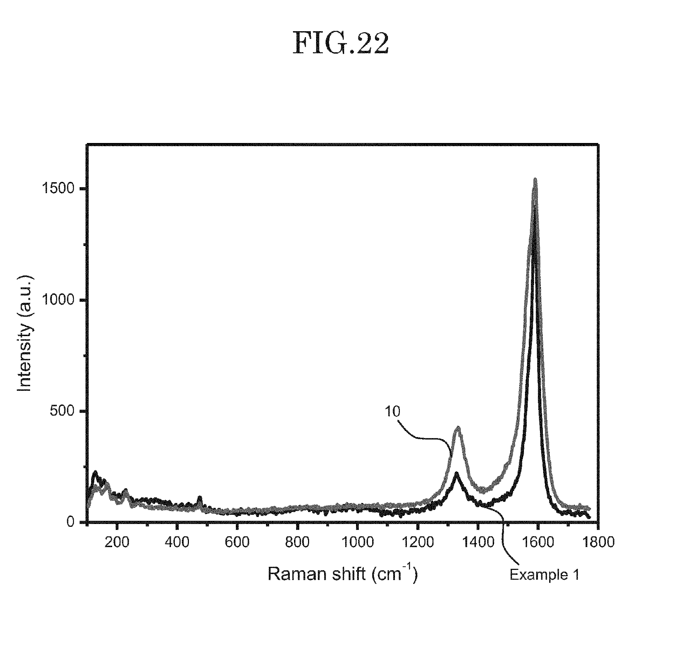

Fig. 22 shows a Raman spectrum of a CNT metal composite. In the present example, a micro-Raman spectrum was measured by a laser with an excitation wavelength of 514 nm using a Nicolet Almega XR Micro Raman Analysis System (manufactured by Thermo Scientific). The CNT aggregate 10 was observed at a sharp G band peak in the vicinity of 1590 kaiser, a graphite crystal structure was shown to be present on the CNT 11 which forms the CNT aggregate 10 and a D band peak derived from a defect structure etc was observed in the vicinity of 1340 kaiser. As is shown in Fig. 22, in the CNT metal composite 100, the Raman spectrum G/D ratio slightly decreased with respect to the CNT aggregate 10 which was not electrolyte plated due to copper being attached to the CNT aggregate 10.

In addition, a thermogravimetric analysis (TG) was also performed on the CNT metal composite 100. In the present embodiment, a 15 mg or less sample was heated and TG measured in a range of 0°C or more and 900°C (10°C/min) using a TGA-Q-5000 (manufactured by TA instruments). The TG measurement result was a mass ratio between copper and CNTs included in the CNT metal composite as follows; copper 92.6%, CNT 7.4%. In addition, the volume ratio of copper and CNTs was copper 43.6%, CNT 56.4%.

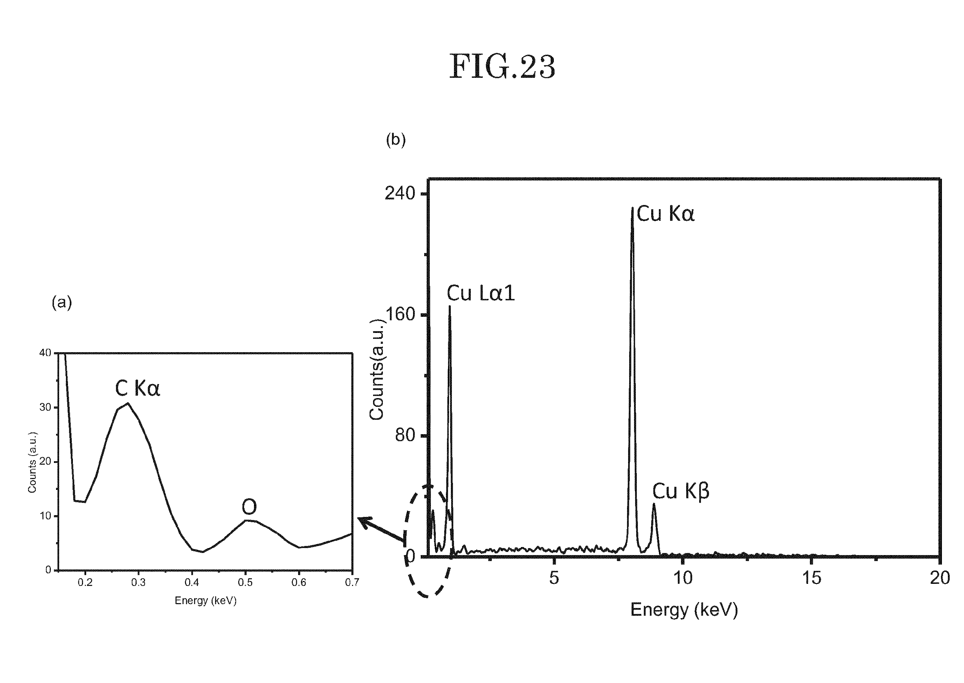

The CNT metal composite 100 was measured using a Scanning Electron Microscopy and Energy Dispersive X-ray spectroscopy (SEM-EDAX). In the present example, a SEM image was imaged at an operating voltage of 20kV using an environmental control type scanning electron microscope (manufactured by Hitachi High Technologies) and an energy dispersion type X-ray analysis (EDAX) was performed while cooling the experiment container in liquid nitrogen using an EDAX analyser (manufactured by HORIBA). Fig. 23 shows the EDAX measurement results. Fig. 23 (a) is an expanded diagram of a low energy region of Fig. 23 (b). In the CNT metal composite 100, a peak derived from copper and carbon was observed while almost no impurities were detected. As is shown in Fig. 23 (a) although a peak derived from oxygen was slightly detected it was presumed that this was derived from slightly oxidized copper particles on the surface. The CNT metal composite is arranged with a plurality of particle shaped bodies with a size of 1 µm or less.

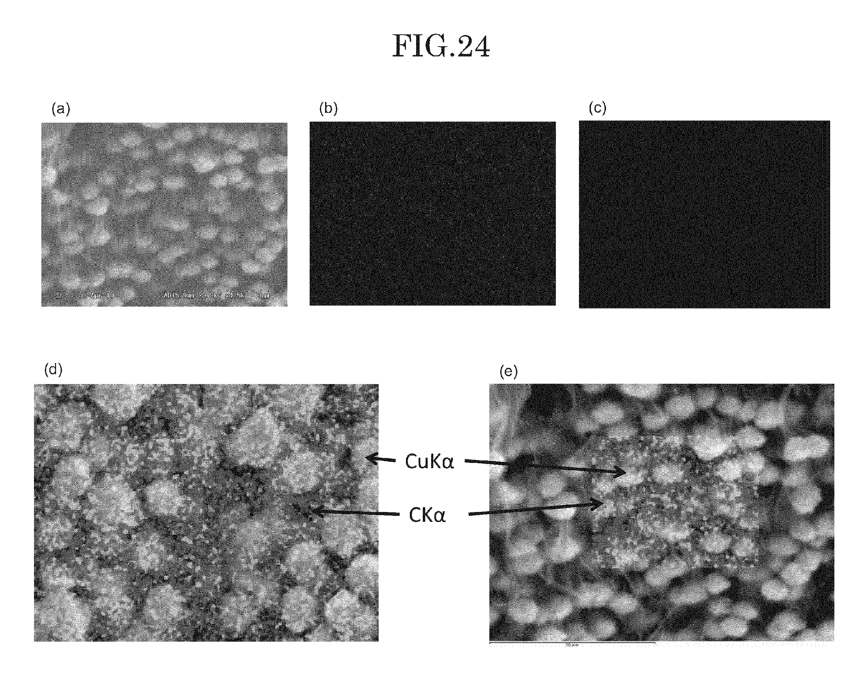

The SEM-EDAX measurement results of the CNT metal composite 100 are shown in Fig. 24. Fig. 24 (a) is a SEM image, Fig. 24 (b) is a Cu-Kα mapping and Fig. 24 (c) shows each C-Kα mapping. Fig. 24 (d) is an image showing energy mapping between Cu-Kα and C-Kα and Fig. 24 (e) in an image where image mapping between Cu-Kα and C-Kα are overlapped on a part of the SEM image. As is shown in Fig. 24, in the CMT metal composite 100, it was clear that copper was uniformly attached as far as the interior of the CNT aggregate 10.

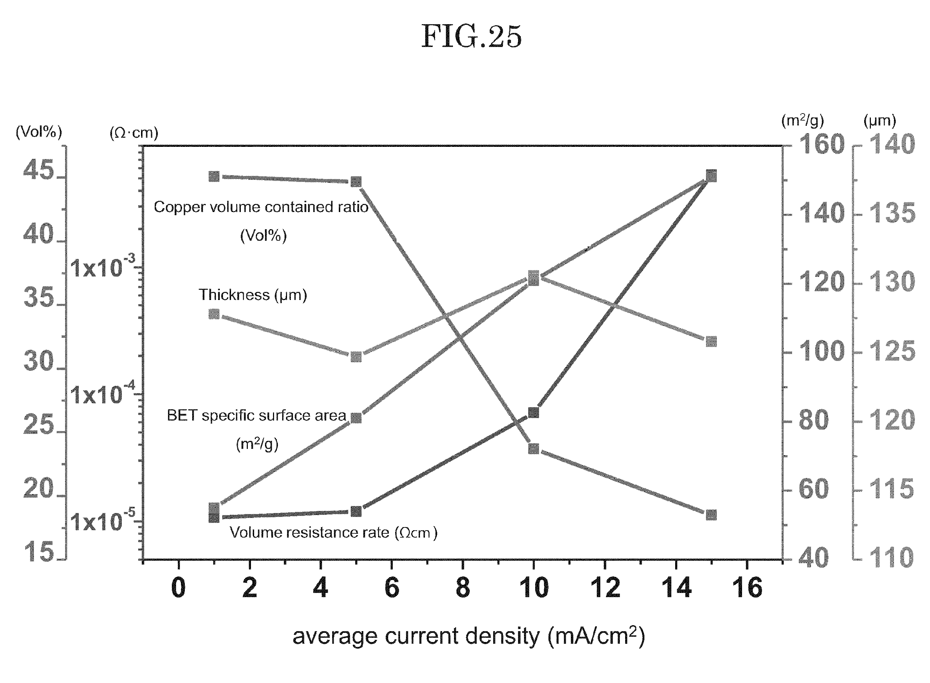

Next, the effects of an average current density in the electrolyte plating process on copper attached to the interior of the CNT aggregate 10 was examined. Fig. 25 is a diagram which shows the relationship between average current density (mA/cm²) in the electrolyte plating process, volume resistance rate (Ωcm) of the CNT metal composite 100, volume contained ratio (Vol%) of copper in the CNT metal composite 100, BET specific surface area (m²/g) and thickness of the CNT metal composite 100. The CNT metal composite 100 in example 1 having undergone electrolyte plating at 1 mA/cm² showed a very small volume resistance rate of 1.8x10⁻⁵ Ωcm. In addition, the specific surface area was 55 m²/g and the volume contained ratio of copper was 43.6%.

On the other hand, in the comparative example 2 where a CNT metal composite 100 was created with an average current density of 15 mA/cm², the volume resistance rate was large at 5.5x10⁻³ Ωcm. In addition, a specific surface area was 150 m²/g and a volume contained ratio of copper was 17%. From this result, it could be seen that performing electrolyte plating on the CNT aggregate at an average current density smaller than 10 mA/cm² is preferred in order to obtain a CNT metal composite with a small volume resistance rate. That is, when the electrolyte plating speed is increased, the copper is attached to the exterior surface of the CNT aggregate 10 but is presumed to obstruct attachment of the copper to the interior of the CNT aggregate 10.

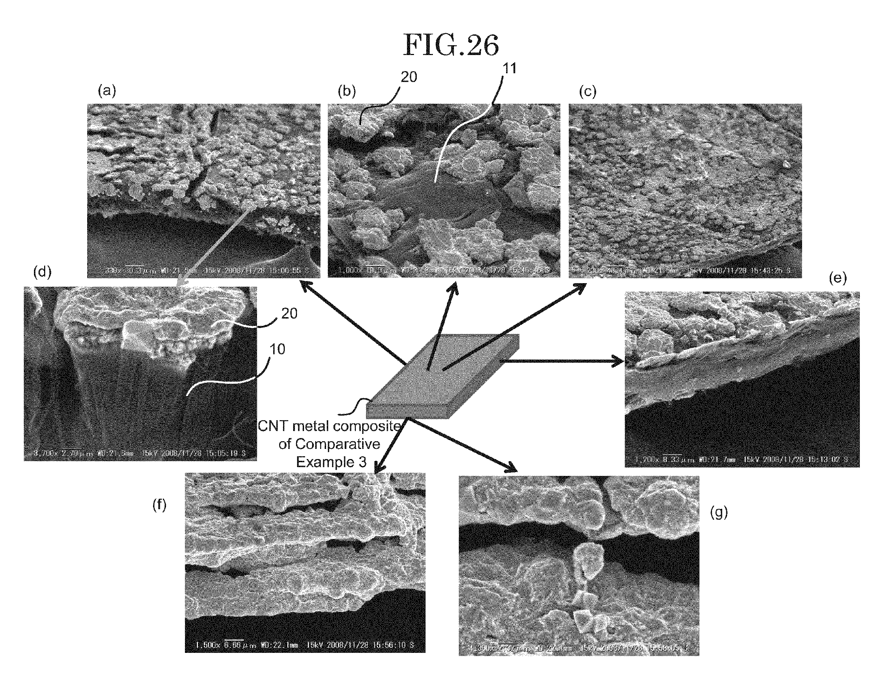

Next, the effects of an organic solvent used in the metal ion solution in the electrolyte plating process were examined. The CNT metal composite 100 having undergone electrolyte plating using a copper ion solution with acetonitrile as a solvent was attached uniformly with copper nano-particles to the interior of the CNT aggregate 100 and a copper layer was formed throughout as is shown in Fig. 19. However, as is shown in Fig. 26, in a CNT metal composite of comparative example 3 having undergone electrolyte plating using a copper ion solution with water as a solvent it was confirmed that copper particles 20 were only attached to the exterior surface of the CNT aggregate 10 and it was clear that copper particles 20 did not penetrate as far as the interior of the CNT aggregate 10. Fig. 26 (a) is a SEM image at a low magnification of an internal cross section when the CNT metal composite is cut parallel to the orientation direction of the CNT aggregate 10, Fig. 26 (d) is the same SEM image at a high magnification and other diagrams are SEM images of an external surface 100a of the CNT metal composite 100. Therefore, it was validated that it is effective to use an organic solvent which functions as an non-aqueous solvent of an inorganic salt in order to penetrate metal ions as far as the interior of the CNT aggregate 10 having high hydrophobic properties.

In addition, when the relationship between the hydrophobic properties of an organic solvent and the attachment of copper particles to the interior of the CNT aggregate 10 was examined, in the case where ethanol with low hydrophobic properties or an ethanol water mixed solution was used as the solvent, because the solubility of copper ions with respect to ethanol is low and the ion transfer rate is low, attachment of copper particles to the CNT aggregate 10 was not confirmed. Therefore, in examples 1 it was validated that acetonitrile was suitable as an organic solvent for dissolving metal salts.

When the CNT aggregate 10 was annealed at 300°C in air the volume resistance value increased. This was considered to be because the copper was further oxidized. In this way, it was validated that performing annealing in a hydrogen atmosphere was suitable for manufacturing a CNT metal composite including a low volume resistance value.

### (Example 2: Pattern Formation Method of a CNT Metal Composite)

A specific example of a pattern formation method of a CNT metal composite 600 is illustrated as example 2. In the present example, a wire shaped CNT metal composite, a CNT metal composite, conductor, wiring and circuit mounted on a substrate are explained.

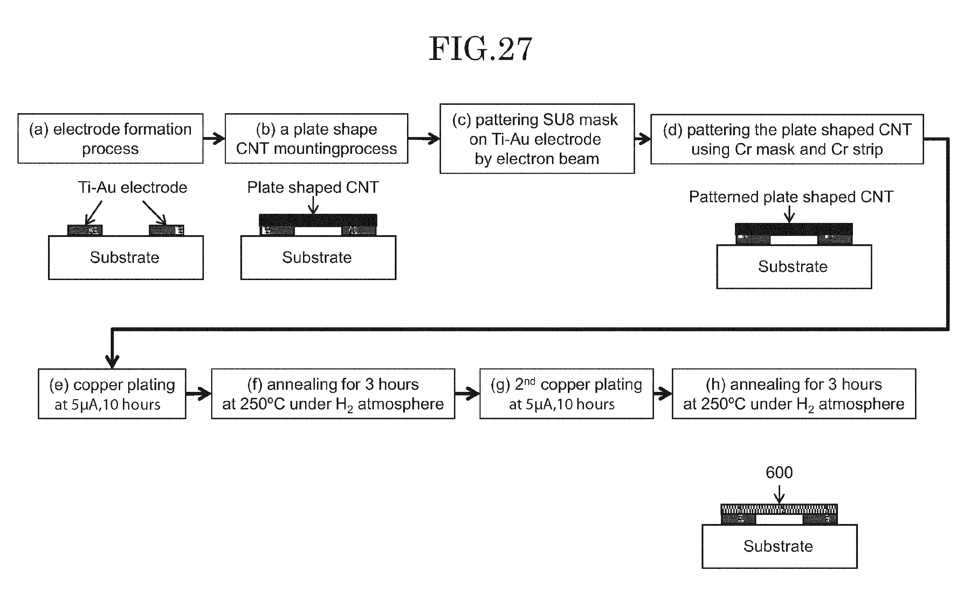

Fig. 27 is an exemplary diagram which shows a manufacturing process of the patterned formed CNT metal composite 600 of example 2. In the present example, a semi-highly densified CNT aggregate in which a CNT orientated aggregate with a thickness of 8 µm was sheared was used using the method described in Patent Application 2008-038029. It is possible to use a Si₃N₄ substrate or Si-SiO₂ substrate etc. as the substrate for mounted the CNT aggregate and in the present example an example using a Si₃N₄ substrate is explained. The pore size distribution maximum of the CNT aggregate calculated using the BJH method was 8 nm.

An electrode formation process (a), a plate shape CNT mounting process (b), mask formation process (c), patterning the plate shape CNT process (d), first electrolyte plating process (e), first annealing process (f), electrolyte plating process (g) and second annealing process (h) were used in the manufacture of the CNT metal aggregate 600.

A pillar or grove, Ti-Au electrode and Ti-Au wiring were formed on a substrate using known micro-processing technology according to necessity.

IPA was dripped on the substrate in order to form a desired arrangement on a substrate arranged with a Ti-Au electrode and Ti-Au wiring and a desired arrangement was formed by immersing the CNT aggregate into the IPA. The substrate mounted with the CNT aggregate was heated for 20 minutes at 180°C using a vacuum desiccator and any IPA absorbed by the CNT aggregate was removed.

The CNT aggregate 10 mounted on the substrate was patterned to a desired shape. Patterning was performed by first washing the substrate and performing an O₂ plasma process. A PMMA 495 resist was spin coated at 4000 rpm onto the upper surface of the washed substrate and baked for 60 seconds at 180°C. Next, hydrogensilsesquioxane (HSQ: product name Fox 16, manufactured by Dowchonin) was spin coated at 4000 rpm onto the upper surface of the PMMA 495 resist and baked for 480 seconds at 120°C. EBL was performed using a CABL 8000 (manufactured by Crestech) and pattern exposure was performed with a 0.15 µm dose and a current of -6.0 nA. A pattern was developed using a TMAH developer, washed with water, blown with nitrogen gas and quickly dried. Next, etching of the CNT aggregate was performed using RIE under the following conditions, 80W, 76 sscm of O₂, 4 sscm of CHF₄ and 10 sscm of Ar. After the etched substrate was immersed in Buffered Hydrogen Fluoride (BHF) and a lift off process was performed, the substrate was processed using IPA for 180 seconds, blown with nitrogen gas and quickly dried.

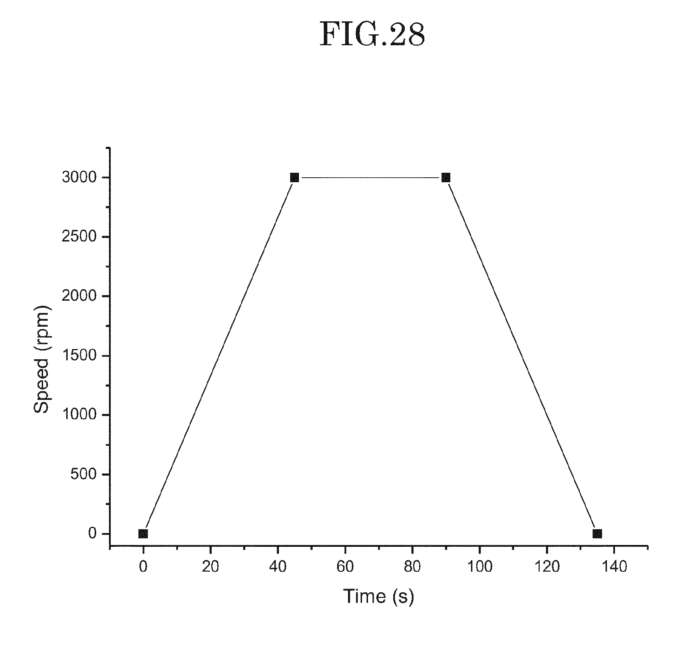

Only the patterned CNT aggregate 650 was plated in the electrolyte plating process and a mask was patterned using a SU-8 mask on the Ti-Au wiring in order to prevent the attachment of copper to the Ti-Au wiring applied with a voltage. In the present example, SU-8 spin coating was performed using the profile shown in Fig. 28 and baked for 150 seconds at 90°C. Patterning of the SU-8 was performed by laser lithography using a 405 nm light source (5V, 70 µm/s). Next, a pattern was exposed using a SU-8 developer, cleaned with water, blown with nitrogen gas and dried.

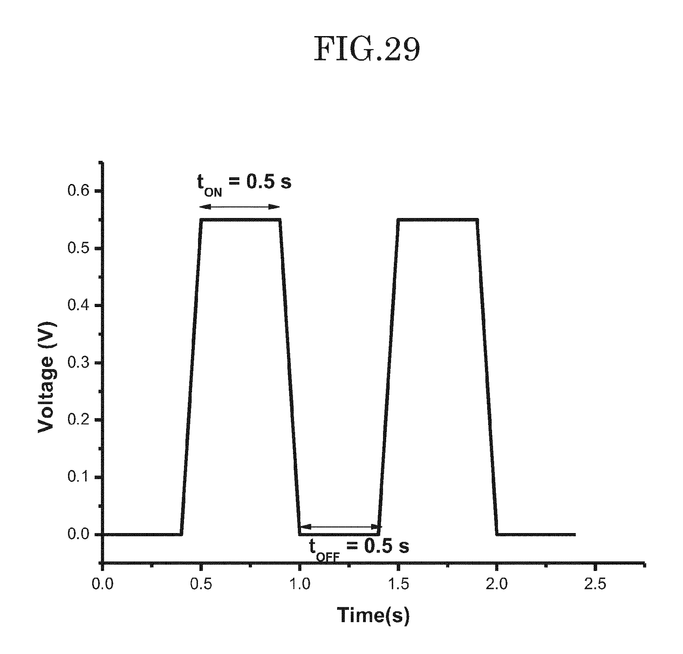

Next, a copper sheet (11 mm x 50 mm) was connected to an anode 6110 of a solution 6050 (VP3 galvanostat/potentiostat/frequency response analyser, manufactured by Princeton Applied Research) arranged with an electrode in a PEEK resin container and a substrate mounted with the patterned CNT aggregate 650 described above was connected to a cathode 6130 in order to perform electrolyte plating. Filter paper was arranged and insulated between the anode 6110 and cathode 6130. 27.5 mM of copper acetate and 200 ml of an acetonitrile solution were added as a copper ion solution and left for 10 minutes in a vacuum desiccator so that the copper ion solution penetrated as far as the interior of the CNT aggregate. The Ti-Au electrode was wrapped in aluminium foil so that a voltage could be applied when performing electrolyte plating. Electrolyte plating was performed for 10 hours by applying a pulse voltage using the profile shown in Fig. 29.

The electrolyte plated CNT metal composite was washed with acetonitrile, dried for 1 hour at 70°C in a vacuum desiccator and annealed for 3 hours in a heating furnace at 250°C under a H₂ atmosphere with a constant flow amount of 150 sscm.

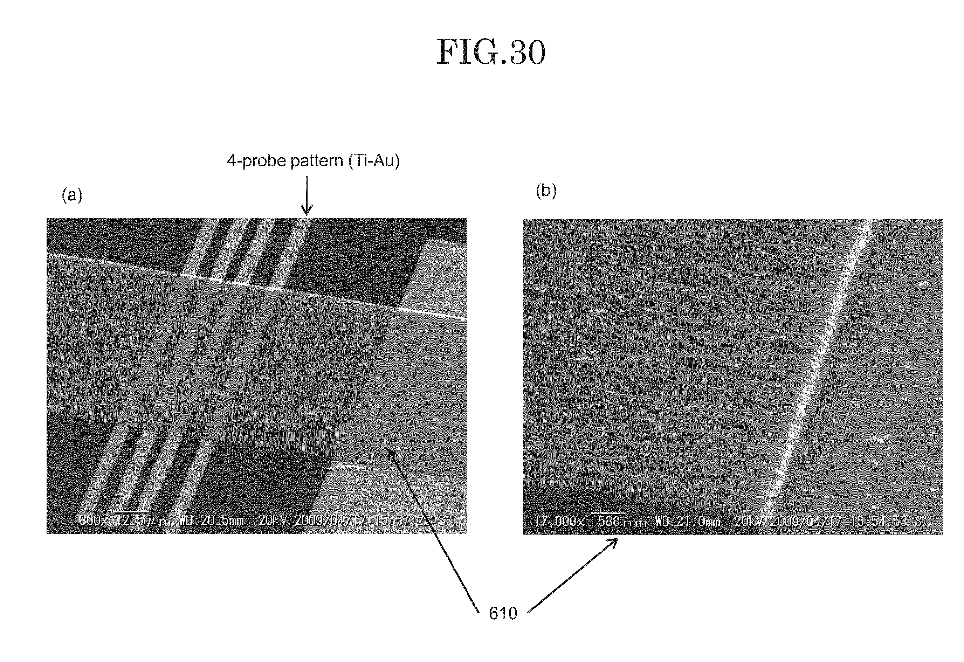

Fig. 30 is a SEM image of a patterned CNT aggregate 610 of example 2 manufactured using the method described above. Fig. 30 (b) is an expanded view diagram of the CNT aggregate shown in Fig. 30 (a).

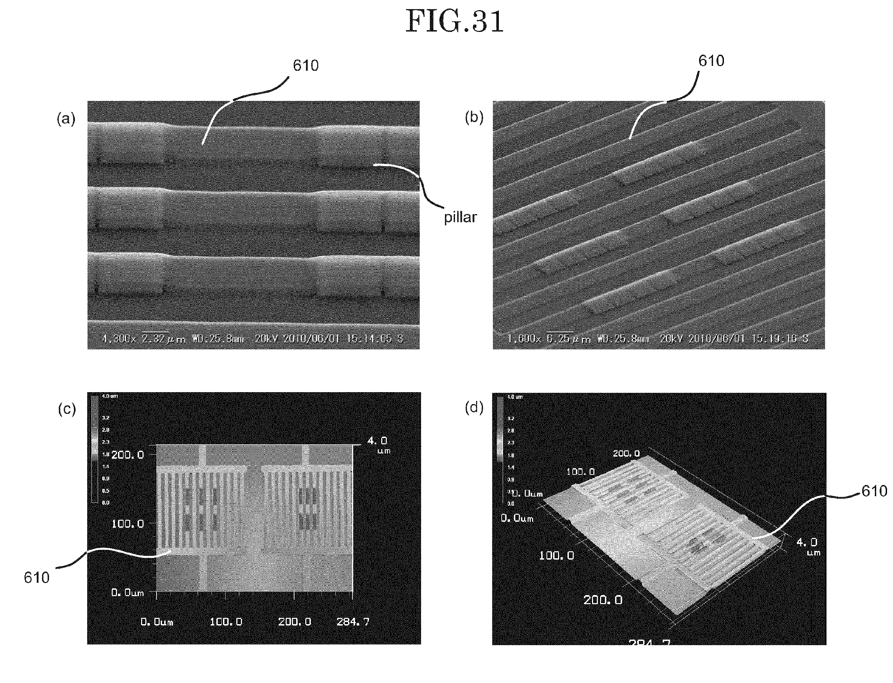

Fig. 31 is a diagram showing the pattern formed CNT aggregate 610 mounted on a pillar with height of 500 nm, Fig. 31 (a) and Fig. 31 (b) are SEM images and Fig. 31 (c) and Fig. 31 (d) are laser microscope images. In addition, Fig. 31 (a) is an expanded view diagram of the CNT aggregate 610 shown in Fig. 31 (b), Fig. 31 (c) is an image observed from above and Fig. 31 (d) is an image observed from obliquely upwards. From Fig. 31 it is clear that in the present example a three dimensional pattern was formed on the CNT aggregate 610 mounted on the pillar with a height of 500 nm.

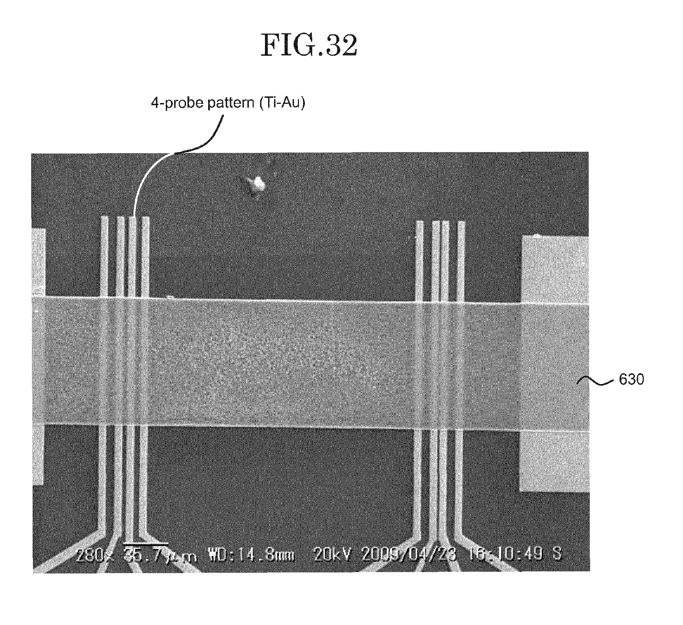

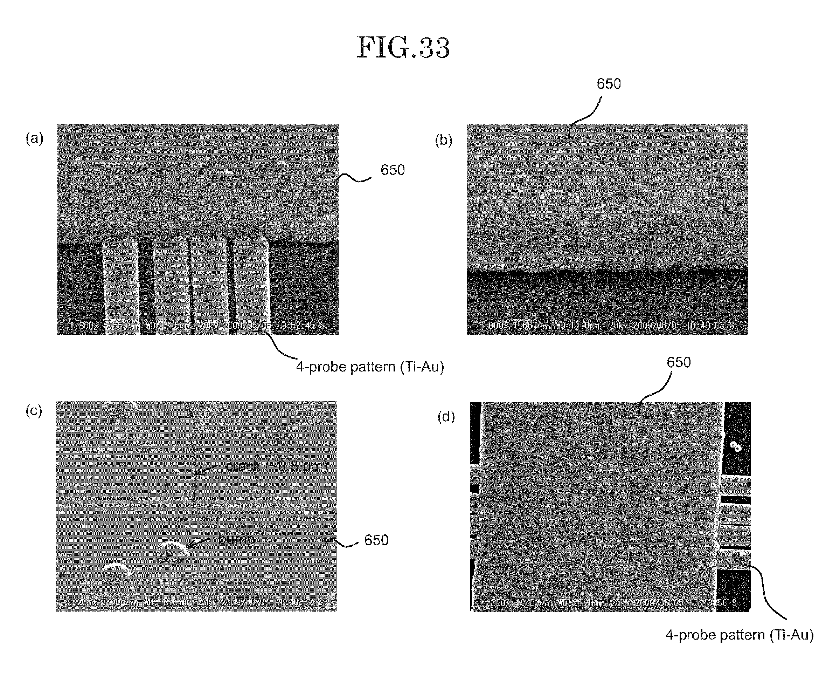

Fig. 32 is a SEM image of a CNT metal composite 630 electrolyte plated on the pattern formed CNT aggregate 610. The CNT metal composite 630 had a volume resistance rate of 1.6x10⁻² Ωcm. In addition, Fig. 33 is an expanded view diagram of Fig. 32, Fig. 33 (a) is a diagram of a part where a Ti-Au wire and CNT metal composite contact observed from obliquely upward, Fig. 33 (b) is a diagram of the CNT metal composite 630 observed from obliquely upward, Fig. 33 (c) is a diagram of a part where a Ti-Au wire and CNT metal composite 630 contact observed from obliquely upward, and Fig. 33 (d) is an expanded view diagram of Fig. 33 (c). From Fig. 33 it is clear that in the present example pattern formation is possible and that the CNT metal composite 630 is manufactured with copper being uniformly plated.

Next, the effects of annealing the CNT metal composite were examined. As described above, the volume resistance rate of the CNT metal composite 630 having undergone only the electrolyte plating process was 1.6x10⁻² Ωcm. As a result of annealing the CNT metal composite 630 for 3 hours in a heating furnace at 250°C under a H₂ atmosphere, the volume resistance rate of the CNT metal composite 630 dropped to 2.8x10⁻³ Ωcm. Therefore, in the present example, it was proven that the volume resistance rate of the CNT metal composite 630 improved due the annealing process.

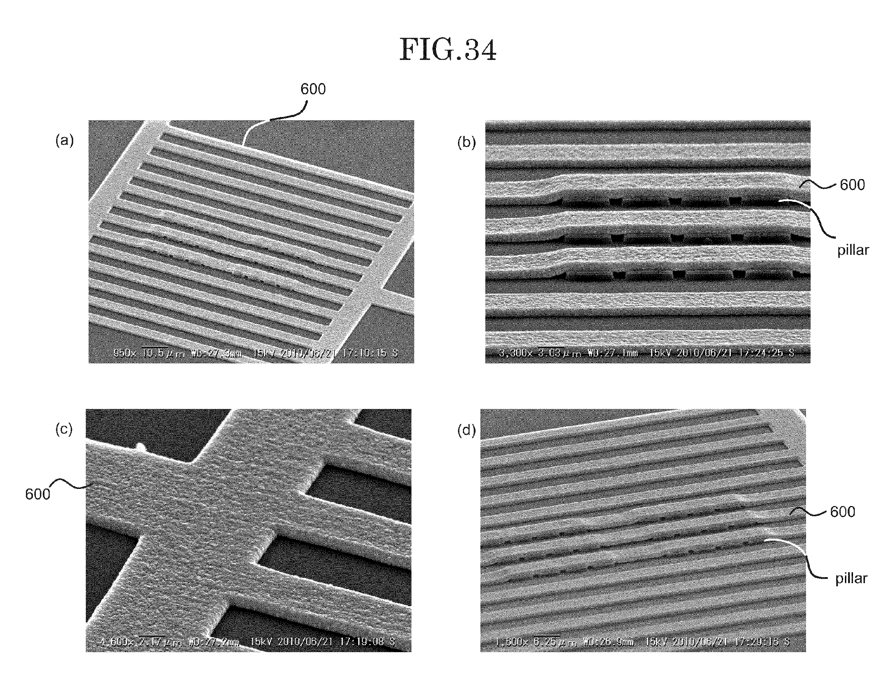

Furthermore, an examination was performed in order to improve the conductivity of the CNT metal composite 650. As is shown in Fig. 33, a crack was produced in the CNT metal composite 650 which was electrolyte plated once. As a result, performing electrolyte a second time was examined. In the present example, electrolyte plating was performed a second time for 3 hours at 50 µA/cm² using a copper ion aqueous solution. An electrolyte plated CNT metal composite 600 was annealed under the same conditions described above. As a result, the volume resistance rate of the CNT metal composite 600 dropped to 9.8x10⁻⁵ Ωcm and excellent conductivity was shown. In the CNT metal composite 600, a peak derived from copper oxide (I) (Cu₂O) was measured at a diffraction angle of 39.1° ((200) Cu2O)), and the strength ratio with the strongest peal (111) of copper was 90. Fig. 34 is a SEM image of the CNT metal composite 600 manufactured in this way. In the present example, it was possible to pattern a CNT metal composite to a pillar up to 1 µm.

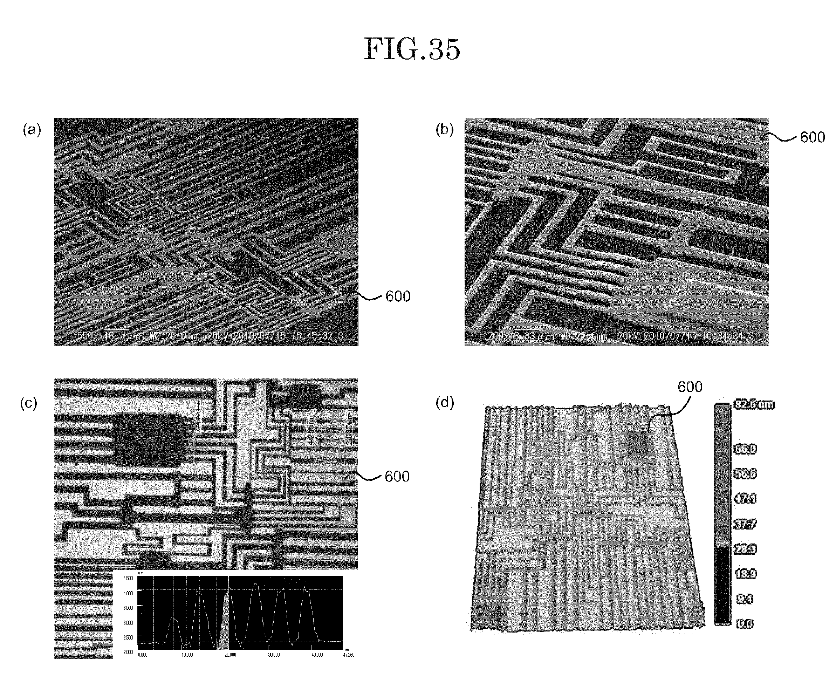

Fig. 35 is a SEM image which shows an example of forming a circuit using the patterning method described above. In this way, in the present example, it was proven that it is possible to manufacture a circuit arranged with good accuracy at certain intervals by using the patterned CNT metal composite 600.

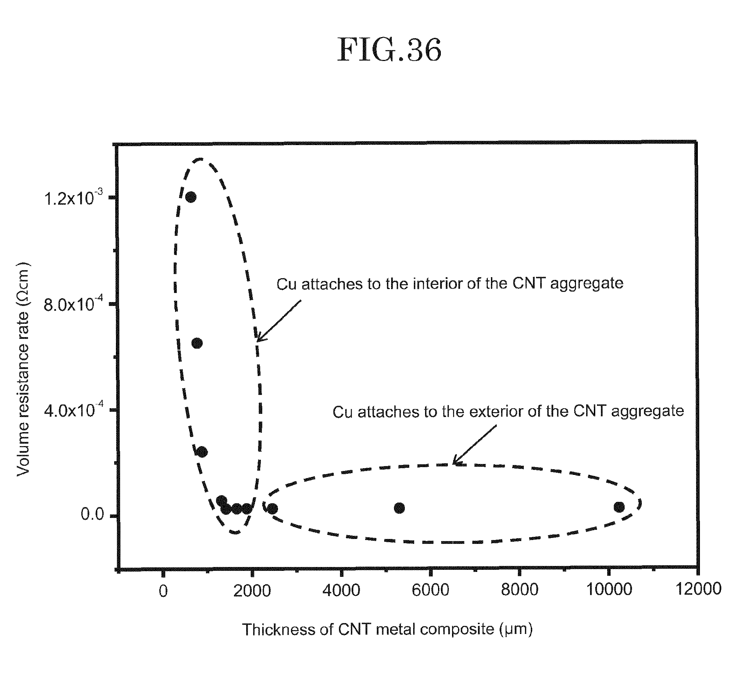

Lastly, in the CNT metal composite related to the present example, it was examined whether excellent conductivity depends on the amount of copper attached to a CNT aggregate. Fig. 36 is a diagram which shows the relationship between the thickness and volume resistance rate of a manufactured CNT metal composite. In the present example, the thickness of a CNT metal composite was changed by changing the length of the electrolyte plating process and the volume resistance rate was measured. As is shown in Fig. 36, in a CNT metal composite with a thickness up to 1000 nm, although the volume resistance rate decreased as the thickness of the CNT metal composite increase, when the thickness exceeds 1000 nm, the volume resistance rate does not decrease but stays constant. It is inferred that this is because although copper is attached to the interior of the CNT aggregate in the CNT metal composite with a thickness up to 1000 nm, the interior of the CNT aggregate becomes full when the thickness exceeds 1000 nm and only the copper attached to the exterior of the CNT aggregate increase and therefore the amount of attached copper does not contribute to a decrease in the volume resistance rate. Therefore, in the CNT metal composite related to the present invention, it is inferred that the main reason for high conductivity depends on the CNT metal composite and is not caused by the metal attached to the exterior of the CNT metal composite.

### (Example 3: CNT-Tin Metal Composite)

After the CNT orientated aggregate 10 was obtained similar to example 1, electrolyte plating was performed for 24 hours at 5 mA/cm² using 42 mM of tin acetate and acetonitrile solution using the method in example 1. The volume resistance rate of the obtained composite was 2x10⁻³ Ωcm. The strength ratio between the strongest peak belonging to metal and the strongest peak belong to an oxide of the same metal was 100.

### (Example 4: CNT-Nickel Metal Composite)

After the CNT orientated aggregate 10 was obtained similar to example 1, electrolyte plating was performed for 24 hours at 5 mA/cm² using 42mM of tin acetate and acetonitrile solution using the method in example 1. The volume resistance rate of the obtained composite was 1 x10⁻³ Ωcm. The strength ratio between the strongest peak belonging to metal and the strongest peak belong to an oxide of the same metal was 50.

### EXPLANATION OF THE REFERENCE SYMBOLS

10 CNT aggregate
11 CNT
12 Fiber shaped CNT
13 CNT orientated aggregate
15 Aggregate part
15a Aggregate part
15b Aggregate part
17 Dispersion part
20 Metal
25 Attachment film
100 CNT metal composite related to the present invention
100a Exterior surface of a CNT metal composite
100 Interior cross section of a CNT metal composite
101 First part
103 Second part
105 Third part
110 plated CNT aggregate
150 Substrate
191 Space
193 Step part
200 CNT metal composite related to the present invention
210 Plate shaped CNT aggregate
213 CNT orientated aggregate
300 pattern formed CNT metal composite related to the present invention
301 Beam shaped CNT metal composite related to the present invention
303 Beam shaped CNT metal composite related to the present invention
310 Plate shaped CNT aggregate
313 CNT orientated aggregate
400 Plate shaped CNT metal composite related to the present invention
410 CNT aggregate
500 Plate shaped CNT metal composite related to the present invention
600 CNT metal composite of example 2
610 Patterned CNT aggregate
630 CNT metal composite plated once
650 Annealed CNT metal composite
5000 Synthesis device related to the present invention
5010 Substrate
5011 Substrate
5013 Concave part
5015 Step
5020 Catalyst layer
5021 Catalyst layer
5030 Synthesis furnace
5040 Gas supply pipe
5050 Gas discharge pipe
5060 Heating means
5070 Heated region
5080 Substrate holder
5090 Raw material gas cylinder
5100 Catalyst activator material cylinder
5110 Atmosphere gas cylinder
5120 Reduction gas cylinder
5130 Carbon weight flux adjustment means
5140 Staying time period adjustment means
5150 Heated volume
5160 Discharge volume
5170 Second substrate
5171 Sacrificial layer
5173 Mask
5200 Gas injection means
5210 Gas flow formation means
5220 Turbulence flow control means
6010 Silicon substrate
6050 Metal ion solution
6051 Solution
6100 Electrolyte plating tank
6110 Anode
6130 Cathode
6150 Electrolyte plating solution
6170 Insulation spacer

## Claims

1. A CNT metal composite comprising:
a CNT aggregate formed by adhering a metal onto a plurality of CNTs,
wherein when an X-ray diffraction analysis is performed using a Cu-Kα ray as a radiation source, an intensity ratio between a peak having the greatest intensity belonging to the metal and a peak having the greatest intensity belonging to an oxide of the metal is 10 or more and the volume resistance is 2x10⁻⁶ cm or more and 5x10⁻³ cm or less.

2. A CNT metal composite comprising:
a CNT aggregate arranged with a CNT having a metal adhered to a surface thereupon, the CNT forming a CNT matrix structure,
wherein at least one part of the CNT contacts the metal, and at least one part of the CNT covers the metal, at least one part of the CNT is attached to cover and wrap the metal, at least one part of the CNT is attached to cover a film on a surface of the metal, and at least one part of the CNT contacts and inter-posit the surface of the metal.

3. The CNT metal composite according to claim 1 wherein 3% by weight or more and 70% by weight or less of the CNTs are included.

4. The CNT metal composite according to claim 1 wherein a BET specific surface area of the CNT metal composite is 0.1 m²/g or more and 100 m²/g or less.

5. The CNT metal composite according to claim 1 wherein at least one part of the plurality of CNTs is orientated.

6. The CNT metal composite according to claim 1 wherein the CNT metal composite is patterned.

7. The CNT metal composite according to claim 1 wherein the CNT metal composite is placed on a substrate.

8. The CNT metal composite according to claim 7 wherein a surface of the substrate on which the CNT metal composite is placed includes insulation properties.

9. The CNT metal composite according to claim 1 wherein at least one part of the CNT metal composite is covered by a film to prevent oxidation.

10. The CNT metal composite according to claim 1 wherein the metal is a plating metal.

11. The CNT metal composite according to claim 1 wherein the metal is selected from gold, copper, silver, nickel, zinc, chrome, platinum, tin or an alloy of these or a solder.

12. The CNT metal composite according to claim 1 wherein the metal is copper.

13. The CNT metal composite according to claim 1 wherein the metal is copper and the size of the strength of (111), (200), (220) measured by an X-ray diffraction analysis using a Cu-Kα ray as a radiation source is (111) > (200) > (220) where a 2θ diffraction angle is in a range of 40° or more or 80° or less.

14. The CNT metal composite according to claim 1 wherein the CNT is a single-walled CNT.

15. The CNT metal composite according to claim 1 wherein the CNT metal composite is plate shaped.

16. The CNT metal composite according to claim 15 wherein any of the depth, breadth and thickness exterior dimensions of the plate shaped CNT metal composite is 1 µm or more.

17. The CNT metal composite according to claim 15 wherein two or more of the depth, breadth and thickness exterior dimensions of the plate shaped CNT metal composite is 1 µm or more.

18. The CNT metal composite according to claim 1 wherein the CNT metal composite is line shaped.

19. The CNT metal composite according to claim 18 wherein any of the depth, breadth and thickness exterior dimensions of the line shaped CNT metal composite is 1 µm or more.

20. The CNT metal composite according to claim 18 wherein two or more of the depth, breadth and thickness exterior dimensions of the line shaped CNT metal composite is 1 µm or more.

21. A conductive material comprising the CNT metal composites according to claim 1.

22. Wiring comprising the CNT metal composites according to claim 1.

23. The wiring according to claim 22 wherein the wiring is arranged at certain intervals.

24. A circuit comprising the wiring according to claim 22.

25. A method of manufacturing a CNT metal composite comprising:
a step of preparing a CNT aggregate having a pore diameter distribution maximum of 50 nm or more measured using a BJH method from an adsorption curve using liquid nitrogen;
a first electrolyte plating step for immersing the CNT aggregate in an electrolyte plating solution and electrolyte plating; and
a step of annealing the electrolyte plated CNT aggregate.

26. The method of manufacturing a CNT metal composite according to claim 25 wherein the electrolyte plating solution includes a metallic salt and an organic solvent for dissolving the metallic salt.

27. The method of manufacturing a CNT metal composite according to claim 26 wherein the organic solvent is acetonitrile.

28. The method of manufacturing a CNT metal composite according to claim 26 wherein the metallic salt includes copper.

29. The method of manufacturing a CNT metal composite according to claim 25 wherein the CNT aggregate is electrolyte plated with an average current density of 10 mA/cm² or less.

30. The method of manufacturing a CNT metal composite according to claim 25 wherein the annealing step is performed in a hydrogen atmosphere.

31. The method of manufacturing a CNT metal composite according to claim 30 wherein the process temperature of the annealing step performed in a hydrogen atmosphere is 100°C or more and 700°C or less.

32. The method of manufacturing a CNT metal composite according to claim 25 wherein after the annealing step, the CNT metal composite is immerse in an electrolyte plating solution and a second electrolyte plating step is performed.

33. The method of manufacturing a CNT metal composite according to claim 32 wherein the electrolyte plating solution includes a metallic salt and water for dissolving the metallic salt in the second electrolyte plating step.

34. The method of manufacturing a CNT metal composite according to claim 25 wherein the step of preparing the CNT aggregate further includes a step of placing the CNT aggregate on a surface of a substrate having insulation properties.

35. The method of manufacturing a CNT metal composite according to claim 34 wherein the step of preparing the CNT aggregate further includes a step of patterning the CNT aggregate after placing the CNT aggregate on the substrate.
